# EUROPEAN PATENT SPECIFICATION

(11) **EP 4 145 905 B1**
(45) Date of publication and mention of the grant of the patent: **21.10.2026**
(21) Application number: 21818563.5
(22) Date of filing: 02.06.2021
(51) Int. Cl.: H04W 36/00, H04L 47/70, H04W 92/18, H04W 88/06

(54) **RESOURCE OBTAINING METHOD, RESOURCE PROCESSING METHOD, AND COMMUNICATION DEVICE**
RESSOURCENGEWINNUNGSVERFAHREN, RESSOURCENVERARBEITUNGSVERFAHREN UND KOMMUNIKATIONSVORRICHTUNG
PROCÉDÉ D'OBTENTION DE RESSOURCES, PROCÉDÉ DE TRAITEMENT DE RESSOURCES, ET DISPOSITIF DE COMMUNICATION

(30) Priority: 04.06.2020 CN 202010502196
(43) Date of publication of application: 08.03.2023
(73) Proprietor: Vivo Mobile Communication Co., Ltd., Dongguan, Guangdong 523863 (CN)
(72) Inventor: LIU, Siqi, Dongguan, Guangdong 523863 (CN); ZHOU, Shuai, Dongguan, Guangdong 523863 (CN); JI, Zichao, Dongguan, Guangdong 523863 (CN)
(74) Representative: Murgitroyd & Company
(86) International application number: PCT/CN2021/097907
(87) International publication number: WO 2021/244571

(56) References cited:
- WO-A1-2011/056253
- CN-A- 109 150 487
- CN-A- 109 151 931
- CN-A- 109 194 456
- CN-A- 111 201 826
- "3rd Generation Partnership Project; Technical Specification Group Radio Access Network; V2X Services based on NR; User Equipment (UE) radio transmission and reception; (Release 16)", no. V0.6.0, 10 April 2020 (2020-04-10), pages 1 - 83, XP051893957, Retrieved from the Internet <URL:ftp://ftp.3gpp.org/Specs/archive/38_series/38.886/38886-060.zip R4-2003234_TR 38.886 v0.6.0 V2X service based on NR> [retrieved on 20200410]
- MODERATOR (HUAWEI ET AL: "Email discussion summary for [95e][114] 5G_V2X_NRSL_UE_Concurrent", vol. RAN WG4, no. Electronic Meeting; 20200525 - 20200605, 28 May 2020 (2020-05-28), XP052413129, Retrieved from the Internet <URL:https://ftp.3gpp.org/tsg_ran/WG4_Radio/TSGR4_95_e/Inbox/R4-2008304.zip draft R4-2008304 Summary_114_1st round_v1.docx> [retrieved on 20200528]
- VIVO: "Discussion on switching between LTE SL and NR SL", vol. RAN WG1, no. e-Meeting; 20210125 - 20210205, 18 January 2021 (2021-01-18), XP051970692, Retrieved from the Internet <URL:https://ftp.3gpp.org/tsg_ran/WG1_RL1/TSGR1_104-e/Docs/R1-2101149.zip R1-2101149 Discussion on switching between LTE SL and NR SL.docx> [retrieved on 20210118]

## Description

### TECHNICAL FIELD

This application relates to the field of communications technologies, and in particular, to a resource obtaining method, a resource processing method, and a communications device.

### BACKGROUND

In the related art, a same device may support both a Long Term Evolution (Long Term Evolution, LTE) sidelink (Side Link, SL) function and a new radio (New Radio, NR) SL function. In this case, frequency division multiplexing or time division multiplexing may be performed on LTE SL transmission and NR SL transmission of the device. In a process of transmission from an LTE SL to an NR SL or from an NR SL to an LTE SL, some procedures need to be performed, such as at least one of interaction of functional modules in different technologies, baseband adjustment, and radio frequency adjustment. These procedures consume time, such as a switching period (switching period) and/or a power transit period (transit period), where the power transit period may be a part of the switching period or may be separated from the switching period. During these periods, a signal may not be properly generated or decoded by a receive end, and therefore transmission of the signal may be abandoned. However, in an existing coexistence policy, only a priority comparison rule of an overlapping portion is considered, but some transmission may be abandoned, invalidated, or delayed in this period. Consequently, some higher-priority transmission may be abandoned, invalidated, or delayed due to processing in this period under this rule.

R4-2003234 "3rd Generation Partnership Project; Technical Specification Group Radio Access Network; V2X Services based on NR; User Equipment (UE) radio transmission and reception; (Release 16)" discloses that when a NR V2X UE is operated with TDM between NR SL and LTE SL at n47 without dual PA capability, the maximum UL switching time is defined as [TBD] us and SL reception interruption is allowed during switching time masks shall apply.

R4-2008304 "Moderator (Huawei, HiSilicon) Email discussion summary for 5G_V2X_NRSL_UE_Concurrent" discloses that the switching time can be located on guard symbol at the end of slot and lower priority RAT signal slot.

### SUMMARY

Embodiments of this application provide a resource obtaining method, a resource processing method, and a communications device, to resolve a problem that high-priority transmission is abandoned, delayed, or invalidated when switching is performed between different technologies in a multi-technology coexistence solution.

According to a first aspect, a resource processing method is provided, where the method is applied to a communications device and defined in claim 1.

According to a second aspect, a communications device is provided and defined in claim 7.

According to a third aspect, a readable storage medium is provided, which is defined in claim 8.

Further advantages embodiments of the present disclosure are indicated in the dependent claims. It is to be understood that both the forgoing general description and the following detailed description are exemplary only, and are not restrictive of the present disclosure.

### BRIEF DESCRIPTION OF DRAWINGS

FIG. 1 is a structural diagram of a network system to which embodiments of this application can be applied;
FIG. 2 is a schematic flowchart of a resource obtaining method according to an embodiment of this application;
FIG. 3 is a first schematic flowchart of a resource processing method according to an embodiment of this application;
FIG. 4 is a second schematic flowchart of a resource processing method according to an embodiment of this application;
FIG. 5 is a first schematic location diagram of a first time in a technology switching process according to an embodiment of this application;
FIG. 6 is a second schematic location diagram of a first time in a technology switching process according to an embodiment of this application;
FIG. 7 is a third schematic location diagram of a first time in a technology switching process according to an embodiment of this application;
FIG. 8 is a fourth schematic location diagram of a first time in a technology switching process according to an embodiment of this application;
FIG. 9 is a schematic module diagram of a resource obtaining apparatus according to an embodiment of this application;
FIG. 10 is a first schematic module diagram of a resource processing apparatus according to an embodiment of this application;
FIG. 11 is a second schematic module diagram of a resource processing apparatus according to an embodiment of this application;
FIG. 12 is a structural block diagram of a communications device according to an embodiment of this application;
FIG. 13 is a structural **block diagram of a terminal** according to an embodiment of this application; and
FIG. 14 is a structural **block diagram of** a network side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application defined by the appended claims.

In the specification and claims of this application, the terms "first", "second", and the like are intended to distinguish between similar objects but do not describe a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6-th generation (6-th Generation, 6G) communications system.

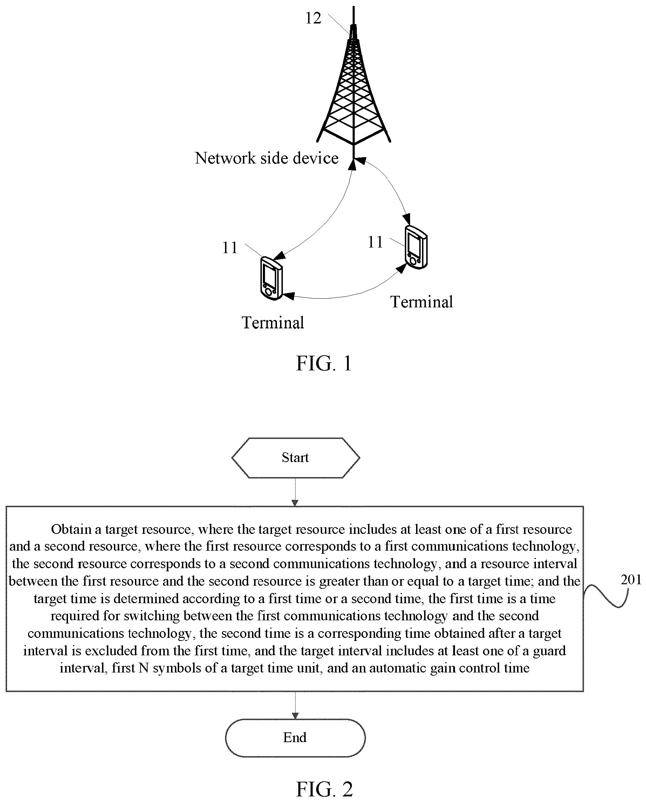

FIG. 1 is a block diagram of a wireless communications system to which embodiments of this application can be applied. The wireless communications system includes a terminal 11 and a network side device 12. The terminal 11 may also be referred to as a terminal device to user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), a vehicle device (vehicle user equipment, VUE), or a pedestrian terminal (pedestrian UE, PUE). The wearable device includes a bracelet, a headset, and glasses. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, a resource obtaining method and a resource processing method provided in the embodiments of this application are described in detail by using specific embodiments and application scenarios.

As shown in FIG. 2, an embodiment of this application provides a resource obtaining method, applied to a communications device. The communications device may be a network side device such as a base station, or may be a terminal. The method includes the following steps:

Step 201: Obtain a target resource, where the target resource includes at least one of a first resource and a second resource.

The first resource corresponds to a first communications technology, the second resource corresponds to a second communications technology, and a resource interval between the first resource and the second resource is greater than or equal to a target time; and
the target time is determined according to a second time, the second time is a corresponding time obtained after a target interval is excluded from a first time, the first time is a time required for switching between the first communications technology and the second communications technology, the target interval includes at least one of first N symbols of a target time unit, and an automatic gain control time, and N is a positive integer. Optionally, the target time is determined according to the first time. Optionally, the target interval further includes a guard period.

Preferably, N is 1, that is, the target interval is a first symbol of the target time unit, for example, the first symbol of a slot.

It should be noted that, in this embodiment of this application, the first time may include the guard period, and the second time is a time corresponding to a part in addition to the guard period in the first time in this case; or the first time may not include the guard period, and the second time is a time obtained after duration corresponding to the guard period is subtracted from the first time.

In this embodiment of this application, a manner of obtaining includes being configured or preconfigured by a base station, being indicated by another terminal or a control node, being determined by the terminal itself, or the like. The control node may be a roadside unit RSU or another node providing a communications technology service. The another terminal may be a relay terminal or a remote terminal.

The different communications technologies may be understood as at least one of the following: different radio access technologies (Radio Access Technology, RAT), and technologies corresponding to transmission on different interfaces (for example, Uu and SL), different services (for example, public safety (public safety) and commercial (commercial)), or different objects (for example, a pedestrian terminal PUE and a vehicle terminal VUE), technologies using different transmission configurations or different transmission preconfigurations (for example, different BWPs, different SCSs, different beams, different CPs, different transmission directions, different cycle prefixes, or different waveforms, where for example, different SL BWPs may also be specifically interpreted as different communications technologies). For example, the different radio access technologies (Radio Access Technology, RAT) may be LTE and NR.

The first resource may be a resource corresponding to the first communications technology, and the second resource may be a resource corresponding to the second communications technology. One of the first communications technology and the second communications technology may be interpreted as one of an NR SL resource or transmission, an LTE SL resource or transmission, an LTE Uu resource or transmission, and an NR Uu resource or transmission, and the other of the first communications technology and the second communications technology may be interpreted as one of an NR SL resource or transmission, an LTE SL resource or transmission, and an Uu resource or transmission. The first communications technology is different from the second communications technology. For example, the first communications technology is an NR SL resource or transmission, and the second communications technology is an LTE SL resource or transmission. For another example, the first communications technology is an LTE SL resource or transmission, and the second communications technology is an NR SL resource or transmission. For another example, the first communications technology is an NR Uu resource or transmission, and the second communications technology is an NR SL resource or transmission. For another example, the first communications technology is an NR Uu resource or transmission, and the second communications technology is an LTE SL resource or transmission. For another example, the first communications technology is an LTE Uu resource or transmission, and the second communications technology is an NR SL resource or transmission. For another example, the first communications technology is an LTE Uu resource or transmission, and the second communications technology is an LTE SL resource or transmission. The Uu resource or transmission includes at least one of an uplink, a downlink, and a flexible resource or transmission.

The time required for switching between the different communications technologies includes at least one of a switching period and a power transit period.

Assuming that the switching period required to switch from the first communications technology to the second communications technology is a first required switching period, and a switching period required to switch from the second communications technology to the first communications technology is a second required switching period, the first required switching period may be the same as or different from the second required switching period.

Optionally, transmission is performed on the target resource after the target resource is obtained.

According to the resource obtaining method in this embodiment of this application, a time interval between a first resource and a second resource corresponding to different communications technologies is greater than a target time, where the target time is determined according to a first time or a second time, the first time is a time required for switching between the different communications technologies, and the second time is a corresponding time obtained after a target interval is excluded from the first time. Therefore, it can be ensured that the resource interval between the first resource and the second resource is greater than the time required for switching between the different communications technologies, to avoid a transmission problem caused by technology switching and effectively ensure transmission quality of a high-priority communications technology.

In addition, at least one of the first resource and the second resource in this embodiment of this application is a resource of the communications device itself, or may be a resource indicated or recommended to another communications device.

Further, the first resource and the second resource are adjacent resources; or
the first resource is any resource of the first communications technology, and the second resource is any resource of the second communications technology.

Further, the obtaining at least one of a first resource and a second resource includes:
obtaining at least one of the first resource and the second resource through resource selection or resource reselection.

The target resource is the resource or the first target resource belongs to the first resource.

Herein, when at least one of the first resource and the second resource is obtained (such as determined, recommended scheduled, or indicated) through resource selection or resource reselection, it is ensured or assumed that the interval between the first resource and the second resource is not less than the first time or the second time.

For example, if there is an LTE SL resource before a user determines a next NR SL resource, it needs to be ensured that a resource interval between the selected next NR SL resource and the LTE SL resource is not less than the first time or the second time or, when recommending, indicating, or scheduling an NR SL resource to a user 2, if a user 1 knows that the user 2 has an LTE SL resource to be transmitted later, it needs to be ensured that a resource interval between the recommended NR SL resource and the LTE SL resource is not less than the first time or the second time.

In this implementation, resource selection or resource reselection is performed to ensure a sufficient switching period between resources transmitted by different technologies.

Further, after the obtaining at least one of a first resource and a second resource, the method further includes:
performing resource selection or resource reselection in an obtained resource.

Further, the obtained resource includes at least one of the following:
a selected resource;
a reserved resource;
a reselected resource;
a recommended resource;
a resource indicated to another user; and
a preempted resource.

In this implementation, resource selection or resource reselection is performed to ensure a sufficient switching period between resources transmitted by different technologies.

In addition, this implementation may be performed a terminal of a control node type or a common terminal.

Further, after the obtaining at least one of a first resource and a second resource, the method further includes:
configuring at least one of the first resource and the second resource.

Herein, the network side device configures at least one of the first resource and the second resource for the terminal after obtaining at least one of the first resource and the second resource. That is, the terminal obtains at least one of the first resource and the second resource through configuration performed by the network side device.

Further, in an optional implementation, the target time is the first time or the second time.

In another optional implementation, the target time is a quantity A of time units included in the first time, and A is a natural number; or
the target time is a quantity B of time units included in the second time, and B is a natural number.

Optimally, the quantity A of time units included in the first time may be the quantity of corresponding time units after rounding is performed on (the first time/time unit), and the quantity B of time units included in the second time may be the quantity of corresponding time units after rounding is performed on (the second time/time unit), where / is a division, and rounding may rounding up or rounding down. Optionally, A and/or B may be a preset value.

For example, assuming that a resource interval between an LTE SL resource and an NR SL resource is not less than the first time, and the first time is 150 us and the time unit is a symbol of 30 kHz, the resource interval is not less than the quantity of corresponding symbols after rounding is performed on (150 us/30 kHz symbol length), that is, not less than five symbols of 30 kHz.

The time units are symbols, slots, milliseconds, or frames.

A subcarrier spacing of the target time is a first subcarrier spacing or a second subcarrier spacing, where
the first subcarrier spacing is a subcarrier spacing of the first resource, and the second subcarrier spacing is a subcarrier spacing of the second resource. The subcarrier spacing of the first resource may also be represented as a subcarrier spacing in the first communications technology, and the subcarrier spacing of the second resource may also be represented as a subcarrier spacing in the second communications technology.

Further, the subcarrier spacing of the target time is a minimum subcarrier spacing in the first subcarrier spacing and the second subcarrier spacing; or
the subcarrier spacing of the target time is a maximum subcarrier spacing in the first subcarrier spacing and the second subcarrier spacing; or
the subcarrier spacing of the target time is a subcarrier spacing in a communications technology using an extended cyclic prefix ECP; or
the target subcarrier spacing of the time unit is a subcarrier spacing corresponding to a communications technology used before the switching.

Herein, assuming that a communications technology used at a time point A is the first communications technology and a communications technology used at a time point B is the second communications technology, communications technology switching is performed at the time point B to switch the first communications technology to the second communications technology.

In a specific embodiment of this application, in an optional implementation, the maximum or minimum subcarrier interval is a maximum or minimum subcarrier interval in a specified frequency range (frequency range, FR), that is, related to a frequency range.

For example, the first subcarrier interval includes 15 kHz in an FR1 and 120 kHz in an FR2, and the second subcarrier interval includes 30 kHz in the FR1 and 60 kHz in the FR2. In the FR1, a maximum subcarrier interval is 15 kHz and a minimum subcarrier interval is 30 kHz. In the FR2, a maximum subcarrier interval is 60 kHz and a minimum subcarrier interval is 120 kHz.

In another optional implementation, the maximum or minimum subcarrier interval is independent of a frequency range, for example, the first subcarrier interval includes 15 kHz in an FR1 and 120 kHz in an FR2, and the second subcarrier interval includes 30 kHz in the FR1 and 60 kHz in the FR2. The maximum subcarrier interval is 120 kHz and the minimum subcarrier interval is 15 kHz.

Further, the guard period is a first guard period or a second guard period, where
the first guard period is a guard period of the first resource, and the second guard period is a guard period of the second resource.

Further, the guard period is a minimum guard period in the first guard period and the second guard period, where optionally, minimum herein means that the least number of symbols are included or the shortest time domain length is occupied; or
the guard period is a maximum guard period in the first guard period and the second guard period, where optionally, maximum herein means that the largest number of symbols are included or the longest time domain length is occupied.
the guard period is a guard period in a communications technology using an ECP; or
the guard period is a guard period corresponding to a communications technology used before the switching.

In this embodiment of this application, the guard period may be the number guard symbols or a length of a guard symbol, for example, a length of a GP. The guard symbol is a minimum guard symbol in a first guard symbol and a second guard symbol, or a maximum guard symbol in a first guard symbol and a second guard symbol, or a guard symbol in a communications technology using an ECP, or a guard symbol corresponding to a communications technology used before the switching. The first guard symbol is a guard symbol of the first resource, and the second guard symbol is a guard symbol of the second resource.

According to the resource obtaining method in this embodiment of this application, a time interval between a first resource and a second resource corresponding to different communications technologies is greater than a target time, where the target time is determined according to a first time or a second time, the first time is a time required for switching between the different communications technologies, and the second time is a corresponding time obtained after a guard period is excluded from the first time. Therefore, it can be ensured that the resource interval between the first resource and the second resource is greater than the time required for switching between the different communications technologies, to avoid a transmission problem caused by technology switching and effectively ensure transmission quality of a high-priority communications technology.

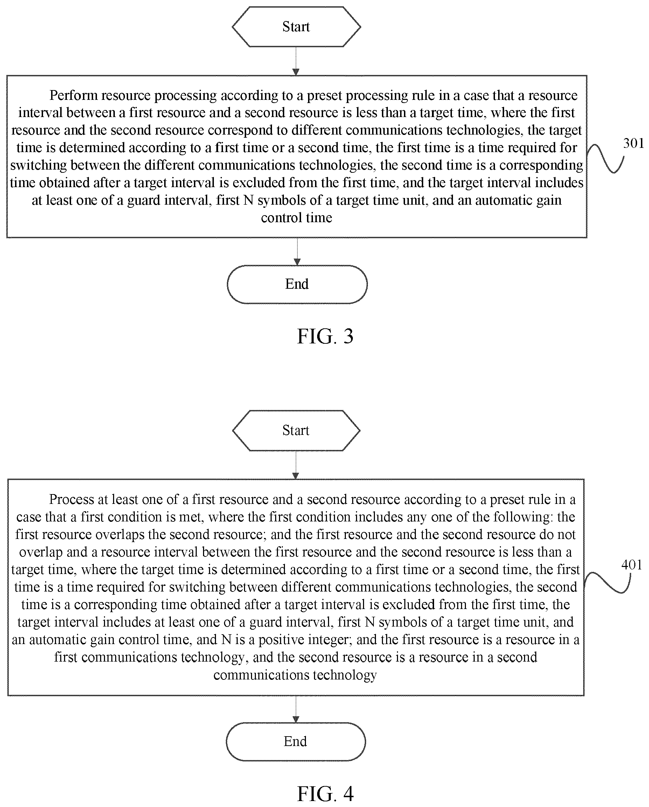

As shown in FIG. 3, an embodiment of this application provides a resource processing method, applied to a communications device. The communications device may be a terminal device, such as a terminal device of a control node type or a common terminal device. The method includes the following steps:

Step 301: Perform resource processing according to a preset processing rule in a case that a resource interval between a first resource and a second resource is less than a target time.

The first resource and the second resource correspond to different communications technologies, the target time is determined according to a second time, the second time is a corresponding time obtained after a target interval is excluded from a first time, the first time is a time required for switching between the different communications technologies, and the target interval includes at least one of first N symbols of a target time unit, and an automatic gain control time. N is a positive integer. Optionally, the target time is determined according to the first time. Optionally, the target interval further includes a guard period.

Specifically, when at least one of the first resource and the second resource is obtained (such as determined, recommended scheduled, or indicated) through resource selection or resource reselection, resource processing is performed according to the preset processing rule in a case that the resource interval between the first resource and the second resource is less than the target time.

The first time herein is the same as the first time in the foregoing resource obtaining method embodiment, the second time is the same as the second time in the foregoing resource obtaining method embodiment, and the guard period is the same as the guard period in the foregoing resource obtaining method embodiment. Details are not described herein again.

Further, the performing resource processing according to a preset processing rule includes at least one of the following:

Excluding at least one of the first resource and the second resource from candidate resources or available resources, where excluding herein may be understood as removing.

For example, the first resource is excluded from resources in the first communications technology, and specifically, the first resource is excluded from (candidate) resources or (available) resources in the first communications technology; and/or the second resource is excluded from resources in the second communications technology, and specifically, the second resource is excluded from (candidate) resource or (available) resources in the second communications technology.

Dropping at least one of the first resource and the second resource.

Herein, dropping resources means that dropped resources are not used for transmission, that is, transmission is canceled.

Canceling transmission on at least one of the first resource and the second resource.

Here, canceling transmission on a resource is canceling transmission on the resource of a specified communications technology, for example, canceling transmission on the first resource of the first communications technology, (optionally, the resource may be used in the second communications technology), and/or canceling transmission on the second resource of the second communications technology, (optionally, the resource may be used in the first communications technology).

Performing resource selection or resource reselection for at least one of a first communications technology and a second communications technology, where
the first communications technology is a communications technology corresponding to the first resource, and the second communications technology is a communications technology corresponding to the second resource.

It should be noted that an overlapping resource in this embodiment of this application may be an overlapping portion of resources in a plurality of communications technologies. In this embodiment of this application, an example in which the overlapping resource is an overlapping resource part of resources in two communications technologies is used for description.

In this embodiment of this application, in a case that a resource interval between a first resource and a second resource is less than a target time, a corresponding processing solution is provided to ensure transmission quality of a high-priority communications technology.

As shown in FIG. 4, an embodiment of this application further provides a resource processing method, applied to a communications device. The communications device may be a network side device or a terminal device. The method includes the following steps:

Step 401: Process at least one of a first resource and a second resource according to a preset rule in a case that a first condition is met.

The first condition includes any one of the following:
that the first resource overlaps the second resource; and
that the first resource and the second resource do not overlap and a resource interval between the first resource and the second resource is less than a target time, where
the target time is determined according to a second time, the second time is a corresponding time obtained after a target interval is excluded from a first time, the first time is a time required for switching between different communications technologies, the target interval includes at least one of first N symbols of a target time unit, and an automatic gain control time, and N is a positive integer; and
the first resource is a resource of a first communications technology, and the second resource is a resource of a second communications technology. Optionally, the target time is determined according to the first time. Optionally, the target interval further includes a guard period.

Further, that the first resource overlaps the second resource means that the first resource overlaps the second resource and a target time domain does not entirely covered by an overlapping resource, where the overlapping resource is an overlapping portion of the first resource and the second resource, and the target time domain is a time domain range to which the target time belongs.

In this embodiment of this application, resource overlapping may be overlapping of a sending resource and a receiving resource, overlapping of sending resources, or overlapping of receiving resources.

That the first resource overlaps the second resource includes at least one of two cases: Case 1: The first resource overlaps the second resource and the target time domain does not entirely covered by the overlapping resource. Case 2: The first resource overlaps the second resource and the target time domain entirely belongs to the overlapping resource. That the target time domain does not entirely covered by the overlapping resource may be understood as that there is the non-overlapping first resource or second resource in the target time domain.

Optionally, this solution is used in at least one of these two cases. Preferably, this solution is used in the case that the first resource overlaps the second resource and the target time domain does not entirely covered by the overlapping resource, that is, there is the non-overlapping first resource or second resource in the target time domain. For example, an LTE SL resource overlaps an NR SL resource, and there is a non-overlapping SL resource in a switching interval.

One explanation that the first resource and the second resource do not overlap is that the first resource and the second resource do not overlap in at least a time domain. Further, the first resource and the second resource do not overlap and an interval between the two is less than the target time. For example, an LTE SL resource and an NR SL resource do not overlap, but a time interval between the two is less than a time required for switching. Switching from an NR SL to an LTE SL may affect the NR SL.

In this embodiment of this application, the target time domain is the time domain range to which the target time belongs, for example, a time domain range to which the first time belongs, or a time domain range to which the second time belongs.

Optionally, the first time may be placed in an NR slot (for example, a head or a tail of the slot), or at a tail of a previous NR slot or a previous LTE subframe (subframe) of a switching moment. The first time may be 150 us or 210 us.

Further, the processing at least one of a first resource and a second resource according to a preset rule in a case that a first condition is met includes:
processing at least one of the first resource and the second resource according to the preset rule based on a first priority X1, a second priority Y1, and/or a third priority X2, where
the first priority X1 is a priority of transmission in the first communications technology on an overlapping resource, and the overlapping resource is an overlapping portion of the first resource and the second resource;
the second priority Y1 is a priority of transmission in the first communications technology in a target time domain; and
the third priority X2 is a priority of transmission in the second communications technology on the overlapping resource.

Transmission in this embodiment of this application includes at least one of receiving and sending (that is, it may be interpreted as sending or receiving), and a priority in this embodiment of this application includes at least one of a configured priority, a preconfigured priority, a priority determined by the user, and a priority indicated by another user.

Further, the processing at least one of the first resource and the second resource according to the preset rule based on a first priority X1, a second priority Y1, and/or a third priority X2 includes:
processing at least one of the first resource and the second resource according to the preset rule based on the first priority, the second priority, and/or the third priority in a case that a third target resource is the first resource, where
the third target resource is a resource before the overlapping resource (and closest to the overlapping resource).

Further, in a first optional implementation, the processing at least one of the first resource and the second resource according to the preset rule based on a first priority, a second priority, and/or a third priority includes:
processing at least one of the first resource and the second resource according to a first preset rule in a case that the first priority X1 is higher than the third priority X2 and/or the second priority Y1 is higher than the third priority X2 (assuming that a higher priority value corresponds to a lower priority, this case may be expressed as min(X1, Y1)<X2), where
the first preset rule includes at least one of the following:
   communications technology switching being performed within the overlapping resource or the second resource, that is, the target time is actually within the overlapping resource or the second resource, and optionally, the first priority is higher than the third priority: communications technology switching is performed within the second resource; or optionally, the second priority is higher than the third priority: communications technology switching is performed within the overlapping resource or the second resource; and
   first Q1 resources of the overlapping resource or first Q1 resources of the second resource being not used for first target transmission, where
   the first target transmission is any transmission, or the first target transmission is transmission in the second communications technology. For example, the first Q1 resources of the overlapping resource may be used for transmission in the first communications technology.

Herein, Q1 is determined according to the target time, or Q1 is determined according to the overlapping resource. Optionally, duration corresponding to Q1 is not less than the first time or the second time. Optionally, duration corresponding to Q1 is equal to duration corresponding to the overlapping resource, that is, an overlapping portion is not used for transmission.

Further, in a second optional implementation, the processing at least one of the first resource and the second resource according to the preset rule based on a first priority, a second priority, and/or a third priority includes:
processing at least one of the first resource and the second resource according to a second preset rule based on the first priority and/or the second priority in a case that transmission in the second communications technology on the overlapping resource meets a preset condition, where
the second preset rule includes at least one of the following:
   communications technology switching being performed within the overlapping resource or the second resource, that is, the target time is actually within the overlapping resource or the second resource, and optionally, the first priority exists: communications technology switching is performed within the second resource; or optionally, the second priority exists: communications technology switching is performed within the overlapping resource or the second resource; and
   first Q2 resources of the overlapping resource or first Q2 resources of the second resource being not used for second target transmission, where
   the second target transmission is any transmission, or the second target transmission is transmission in the second communications technology. For example, the first Q2 resources of the overlapping resource may be used for transmission in the first communications technology.

Herein, Q2 is determined according to the target time, or Q2 is determined according to the overlapping resource. Optionally, duration corresponding to Q2 is not less than the first time or the second time. Optionally, duration corresponding to Q2 is equal to duration corresponding to the overlapping resource, that is, an overlapping portion is not used for transmission.

Herein, the processing at least one of the first resource and the second resource according to a second preset rule based on the first priority and/or the second priority includes:
processing at least one of the first resource and the second resource according to the second preset rule based on the first priority or the second priority.

Specifically, when there is the first priority, at least one of the first resource and the second resource is processed according to the second preset rule based on the first priority. When there is the second priority, at least one of the first resource and the second resource is processed according to the second preset rule based on the second priority.

The processing at least one of the first resource and the second resource according to a second preset rule based on the first priority and/or the second priority includes:
processing at least one of the first resource and the second resource according to the second preset rule when the first priority and the second priority exist.

Further, in a third optional implementation, the processing at least one of the first resource and the second resource according to the preset rule based on a first priority, a second priority, and/or a third priority includes:
processing at least one of the first resource and the second resource according to a third preset rule in a case that both the first priority X1 and the second priority Y1 are lower than the third priority X2 (assuming that a higher priority value corresponds to a lower priority, this case may be expressed as min(X1, Y1)>X2), where
the third preset rule includes at least one of the following:
   communications technology switching being performed within the first resource, that is, the first time is included in resources in the first communications technology; and
   first Q3 resources of the first resource or first Q3 resources of the overlapping resource being not used for third target transmission, where
   the third target transmission is any transmission, or the third target transmission is transmission in the first communications technology. For example, the first Q3 resources of the overlapping resource may be used for transmission in the second communications technology.

Herein, Q3 is determined according to the target time, or Q3 is determined according to the overlapping resource. Optionally, duration corresponding to Q3 is not less than the first time or the second time. Optionally, duration corresponding to Q3 is equal to duration corresponding to the overlapping resource, that is, an overlapping portion is not used for transmission.

Further, in a fourth optional implementation, the processing at least one of the first resource and the second resource according to the preset rule based on a first priority, a second priority, and/or a third priority includes:
processing at least one of the first resource and the second resource according to a fourth preset rule in a case that both transmission in the first communications technology on the overlapping resource and transmission in the target time domain in the first communications technology meet a preset condition, where
the fourth preset rule includes at least one of the following:
   communications technology switching being performed within the first resource; and
   first Q4 resources of the first resource or first Q4 resources of the overlapping resource being not used for fourth target transmission, where
   the fourth target transmission is any transmission, or the fourth target transmission is transmission in the first communications technology. For example, the first Q4 resources of the overlapping resource may be used for transmission in the second communications technology.

Herein, Q4 is determined according to the target time, or Q4 is determined according to the overlapping resource. Optionally, duration corresponding to Q4 is not less than the first time or the second time. Optionally, duration corresponding to Q4 is equal to duration corresponding to the overlapping resource, that is, an overlapping portion is not used for transmission.

Further, the processing at least one of a first resource and a second resource according to a preset rule in a case that a first condition is met includes:
processing at least one of the first resource and the second resource according to the preset rule based on a fourth priority, a fifth priority, and/or a sixth priority, where
the fourth priority is a priority of transmission on a fourth target resource, and the fourth target resource is the first resource before the second resource (and closet to the second resource);
the fifth priority is a priority of transmission in a target time domain in the first communications technology, and the target time domain is a time domain range corresponding to the target time; and
the sixth priority is a priority of transmission on a fifth target resource, and the fifth target resource is the second resource after the first resource (and closet to the first resource).

In this embodiment of this application, if there is a plurality of transmission priorities within a resource or a target time domain, the priority of transmission on the resource is a highest or lowest priority among these priorities.

Further, the processing at least one of the first resource and the second resource according to the preset rule based on a fourth priority, a fifth priority, and/or a sixth priority includes:
processing at least one of the first resource and the second resource according to the preset rule based on the fourth priority, the fifth priority, and the sixth priority in a case that the first resource is before the second resource and the resource interval between the first resource and the second resource is less than the target time.

Further, in a first optional implementation, the processing at least one of the first resource and the second resource according to the preset rule based on a fourth priority, a fifth priority, and a sixth priority includes:
processing at least one of the first resource and the second resource according to a fifth preset rule in a case that the fourth priority is higher than the sixth priority and/or the fifth priority is higher than the sixth priority, where
the fifth preset rule includes at least one of the following:
   communications technology switching being performed within the second resource, that is, the first time is included in the second communications technology; and
   W1 second resources after the first resource (and closest to the first resource) being not used for fifth target transmission, where
   the fifth target transmission is any transmission, or the fifth target transmission is transmission in the second communications technology. For example, W1 second resources may be used for transmission in the first communications technology.

Herein, W1 is determined according to the target time. Optionally, duration corresponding to W1 is not less than the first time or the second time.

Further, in a second optional implementation, the processing at least one of the first resource and the second resource according to the preset rule based on a fourth priority, a fifth priority, and/or a sixth priority includes:
processing at least one of the first resource and the second resource according to a sixth preset rule based on the fourth priority and/or the fifth priority in a case that transmission on the fifth target resource meets a preset condition, where
the sixth preset rule includes at least one of the following:
   communications technology switching being performed within the second resource, that is, the first time is included in the second communications technology; and
   W2 second resources after the first resource (and closest to the first resource) being not used for sixth target transmission, where
   the sixth target transmission is any transmission, or the sixth target transmission is transmission in the second communications technology. For example, W2 second resources may be used for transmission in the first communications technology.

Herein, W2 is determined according to the target time. Optionally, duration corresponding to W2 is not less than the first time or the second time.

Further, in a third optional implementation, the processing at least one of the first resource and the second resource according to the preset rule based on a fourth priority, a fifth priority, and/or a sixth priority includes:
processing at least one of the first resource and the second resource according to a seventh preset rule in a case that both the fourth priority and the fifth priority are lower than the sixth priority, where
the seventh preset rule includes at least one of the following:
   communications technology switching being performed within a resource of the first communications technology, that is, the first time is included in the first communications technology; and
   W3 first resources before the second resource (and closest to the second resource) being not used for eighth target transmission, where
   the seventh target transmission is any transmission, or the seventh target transmission is transmission in the first communications technology. For example, W3 second resources may be used for transmission in the second communications technology.

Herein, W3 is determined according to the target time. Optionally, duration corresponding to W3 is not less than the first time or the second time.

Further, in a fourth optional implementation, the processing at least one of the first resource and the second resource according to the preset rule based on a fourth priority, a fifth priority, and/or a sixth priority includes:
processing at least one of the first resource and the second resource according to an eighth preset rule in a case that both transmission on the fourth target resource and transmission in the target time domain in the first communications technology meet a preset condition, where
the eighth preset rule includes at least one of the following:
   communications technology switching being performed within a resource of the first communications technology, that is, the first time is included in the first communications technology; and
   W4 first resources before the second resource (and closest to the second resource) being not used for eighth target transmission, where
   the eighth target transmission is any transmission, or the eighth target transmission is transmission in the first communications technology. For example, W4 second resources may be used for transmission in the second communications technology.

It should be noted that not being used for transmission (not for sending or receiving) in this embodiment of this application may also be represented as not for switching or abandoning switching. In this embodiment of this application, the preset condition includes at least one of the following:
being corresponding to a grant resource that is not actually used in a third communications technology;
being corresponding to canceled transmission in the third communications technology;
being corresponding to transmission that meets the preset number of transmissions in the third communications technology; and
being corresponding to a target transmission type.

The third communications technology may be the first communications technology or the second communications technology, or a communications technology other than the first communications technology and the second communications technology.

The target transmission type includes at least one of the following:
blind transmission;
blind retransmission;
transmission in which a hybrid automatic repeat request HARQ feedback is disabled;
broadcast transmission;
transmission in which a HARQ feedback is not supported; and
transmission in a resource pool or a BWP configured with no feedback channel resource.

Herein, W4 is determined according to the target time. Optionally, duration corresponding to W4 is not less than the first time or the second time.

For example, in a case that the third communications technology is the first communications technology, that transmission on the fourth target resource corresponds to the grant resource that is not actually used in the third communications technology specifically means that transmission on the fourth target resource corresponds to a grant resource that is not actually used in first communications technology. In a case that the third communications technology is different from the first communications technology and the second communications technology, that transmission on the fourth target resource corresponds to the grant resource that is not actually used in the third communications technology specifically means that transmission on the fourth target resource is associated with a grant resource that is not actually used in third communications technology.

For example, transmission on the fourth target resource or transmission in the target time domain in the first communications technology is sidelink reporting information (transmission on a PUCCH or a PUSCH), and the third communications technology is a sidelink transmission technology. In this case, at least one of the following is met:
the sidelink reporting information corresponds to a sidelink configured grant resource that is not actually used, where for example, a NACK needs to be reported due to an unused SL configured grant resource;
the sidelink reporting information corresponds to a canceled sidelink transmission resource, where for example, if a transmitted SL resource or some transmitted SL resources are canceled due to priority comparison, a NACK needs to be reported;
the sidelink reporting information is corresponding sidelink hybrid automatic retransmission request information when sidelink transmission reaches the preset number of transmissions, where for example, when the number of SL TB transmissions or retransmissions reaches the preset number, HARQ-ACK information needs to be reported; and
the sidelink reporting information corresponds to a target transmission type.

In this embodiment of this application, an SL transmission resource includes at least one of a physical sidelink control channel (Physical Sidelink Control Channel, PSCCH), a physical sidelink shared channel (Physical Sidelink Shared Channel, PSSCH), and a physical sidelink feedback channel (Physical Sidelink Feedback Channel, PSFCH). The PSFCH may also be referred to as a feedback resource. The SL reporting information is SL HARQ information or SL channel state information (Channel State Information, CSI) reported by the user to the base station. The resource processing method is described with reference to specific embodiments. The following examples mainly take the first time as an example, and the second time is also applicable, that is, the second time may replace the first time in the following examples.

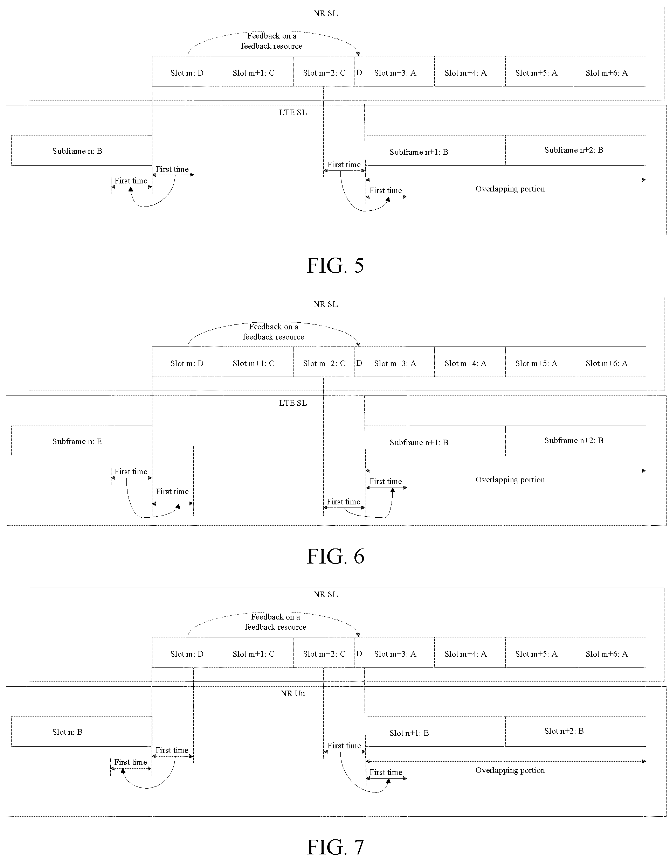

Embodiment 1: Regardless of switching from an LTE SL to an NR SL or switching from an NR SL to an LTE SL, it is assumed that the first time is in an NR slot. For example, a feedback resource PSFCH in a slot m+2 in FIG. 5 corresponds to data transmission with a priority D in a slot m, and therefore a priority of the feedback resource PSFCH in the slot m+2 is also D. Priorities of data transmission in slots m+2 and m+1 are C. In FIG. 5, the priority D>C>B>A.

During the switching from the LTE SL to the NR SL, although there is no overlapping NR SL resource in a subframe n, if the first time is placed in an NR slot m, the NR SL with a higher priority is affected (that is, the feedback resource with the priority D in the figure). Optionally, the user may abandon or delay LTE SL transmission in the subframe n. Optionally, the first time may be placed in an LTE subframe n, that is, module interaction and/or power conversion are/is performed in the LTE subframe n.

During the switching from the NR SL to the LTE SL, a priority of an NR feedback resource in the slot m+2 is higher than a priority of the overlapping LTE SL. Therefore, to avoid affecting the NR SL with a higher priority, optionally, the user may abandon or delay LTE SL transmission in the subframe n+1 and start switching and/or LTE SL transmission from a subframe n+2 or a following LTE SL resource. Optionally, the first time may be included in the subframe n+1 or n+2, that is, module interaction and/or power conversion are/is performed in the subframe n+1 or n+2.

Embodiment 2: It is assumed that the first time is in an NR slot before switching or an LTE subframe before switching. For example, a feedback resource PSFCH in a slot m+2 in FIG. 6 corresponds to data transmission with a priority D in a slot m, and therefore a priority of the feedback resource PSFCH in the slot m+2 is also D. Priorities of data transmission in slots m+2 and m+1 are C. It is assumed that in FIG. 6, a priority E>D>C>B>A. When the terminal finds that a priority of the overlapping LTE SL is higher than a priority of the NR SL, LTE SL transmission is performed.

During the switching from the LTE SL to the NR SL, although there is no overlapping NR SL resource in a subframe n, if the first time is placed in an LTE subframe, transmission of the LTE SL with a higher priority E is affected by the first time. In this case, NR SL transmission in the slot m may be abandoned or delayed. Optionally, the first time may be placed in an NR slot m, that is, module interaction and/or power conversion are/is performed in the NR slot m.

During the switching from the NR SL to the LTE SL, if the first time is placed in the slot m+2, transmission of the NR SL feedback resource with a higher priority D is affected by the first time. Optionally, the user may abandon or delay LTE SL transmission in a subframe n+1, and start switching and/or LTE SL transmission from a subframe n+2 or a following LTE SL resource. Optionally, the first time may be included in the subframe n+1 or n+2, that is, module interaction and/or power conversion are/is performed in the subframe n+1 or n+2.

Embodiment 3: Regardless of switching from an NR Uu to an NR SL or switching from an NR SL to an NR Uu, it is assumed that the first time is in an NR SL slot. For example, a feedback resource PSFCH in a slot m+2 in FIG. 7 corresponds to data transmission with a priority D in a slot m, and therefore a priority of the feedback resource PSFCH in the slot m+2 is also D. Priorities of data transmission in slots m+2 and m+1 are C. In FIG. 7, the priority D>C>B>A.

During the switching from the NR Uu to the NR SL, although there is no overlapping NR SL resource in a slot n, if the first time is placed in an NR slot m, the NR SL with a higher priority is affected. Optionally, the user may abandon or delay NR Uu transmission in the slot n. Optionally, the first time may be placed in an NR Uu slot n, that is, module interaction and/or power conversion are/is performed in the NR Uu slot n.

During the switching from the NR SL to the NR Uu, a priority of an NR feedback resource in the slot m+2 is higher than a priority of the overlapping NR Uu. Therefore, to avoid affecting the NR SL with a higher priority, optionally, the user may abandon or delay NR Uu transmission in the slot n+1 and start switching and/or NR Uu transmission from a slot n+2 or a following NR Uu resource. Optionally, the first time may be included in the slot n+1 or n+2, that is, module interaction and/or power conversion are/is performed in the slot n+1 or n+2.

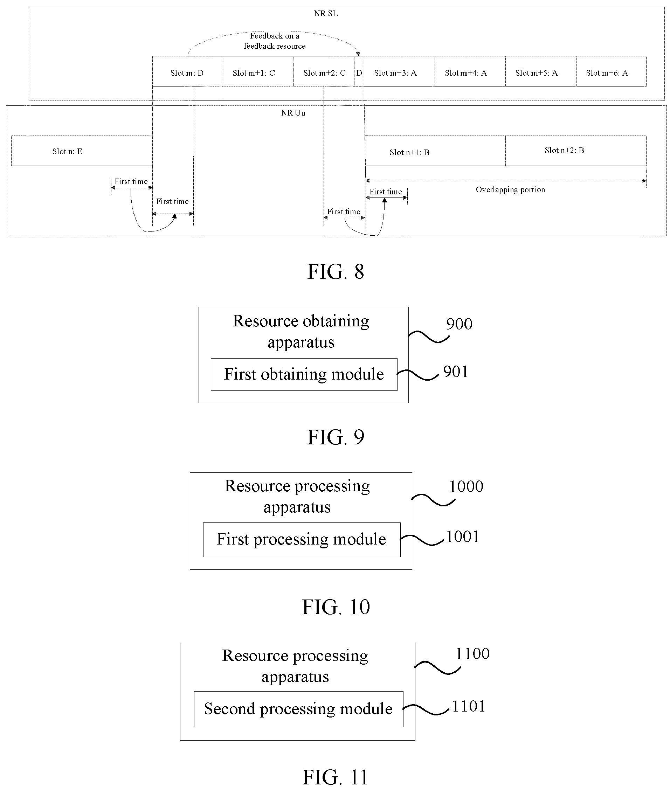

Embodiment 4: It is assumed that the first time is in an NR SL slot before switching or an NR Uu slot before switching. For example, a feedback resource PSFCH in a slot m+2 in FIG. 8 corresponds to data transmission with a priority D in a slot m, and therefore a priority of the feedback resource PSFCH in the slot m+2 is also D. Priorities of data transmission in slots m+2 and m+1 are C. It is assumed that in FIG. 8, a priority E>D>C>B>A. When the terminal finds that a priority of the overlapping NR Uu is higher than a priority of the NR SL, NR Uu transmission is performed.

During the switching from the NR Uu to the NR SL, although there is no overlapping NR SL resource in a slot n, if the first time is placed in an NR Uu slot, NR Uu transmission with a higher priority E is affected by the first time. In this case, NR SL transmission in the slot m may be abandoned or delayed. Optionally, the first time may be placed in an NR slot m, that is, module interaction and/or power conversion are/is performed in the NR slot m.

During the switching from the NR SL to the NR Uu, if the first time is placed in the slot m+2, transmission of the NR SL feedback resource with a higher priority D is affected by the first time. Optionally, the user may abandon or delay NR Uu transmission in a slot n+1, and start switching and/or NR Uu transmission from a slot n+2 or a following NR Uu resource. Optionally, the first time may be included in the slot n+1 or n+2, that is, module interaction and/or power conversion are/is performed in the slot n+1 or n+2.

According to the resource processing method in this embodiment of this application, when a plurality of technologies need to be used for transmission, a corresponding transmission solution is determined according to priorities of transmission expected by the plurality of technologies on candidate resources and a priority corresponding to overheads of a switching period, to ensure transmission quality of a high-priority technology.

It should be noted that the resource obtaining method provided in the embodiments of this application may be performed by a resource obtaining apparatus, or a control module that is in the resource obtaining apparatus and that is configured to perform the resource obtaining method. In the embodiments of this application, that the resource obtaining apparatus performs the resource obtaining method is used as an example to describe the resource obtaining apparatus provided in the embodiments of this application.

As shown in FIG. 9, an embodiment of this application further provides a resource obtaining apparatus 900, applied to a communications device and including:
a first obtaining module 901, configured to obtain a target resource, where the target resource includes at least one of a first resource and a second resource;
the first resource corresponds to a first communications technology, the second resource corresponds to a second communications technology, and a resource interval between the first resource and the second resource is greater than or equal to a target time; and
the target time is determined according to a first time or a second time, the first time is a time required for switching between the first communications technology and the second communications technology, the second time is a corresponding time obtained after a target interval is excluded from the first time, the target interval includes at least one of a guard period, first N symbols of a target time unit, and an automatic gain control time, and N is a positive integer.

In the resource obtaining apparatus in this embodiment of this application, the first resource and the second resource are adjacent resources; or
the first resource is any resource of the first communications technology, and the second resource is any resource of the second communications technology.

In the resource obtaining apparatus in this embodiment of this application, the first obtaining module is configured to obtain at least one of the first resource and the second resource through resource selection or resource reselection.

The resource obtaining apparatus in this embodiment of this application further includes:
a selection module, configured to perform resource selection or resource reselection in an obtained resource after the first obtaining module obtains at least one of the first resource and the second resource.

The resource obtaining apparatus in this embodiment of this application further includes:
a configuration module, configured to configure the first resource and the second resource after the first obtaining module obtains at least one of the first resource and the second resource.

In the resource obtaining apparatus in this embodiment of this application, the obtained resource includes at least one of the following:
a selected resource;
a reserved resource;
a reselected resource;
a recommended resource;
a resource indicated to another user; and
a preempted resource.

In the resource obtaining apparatus in this embodiment of this application, the target time is a quantity A of time units included in the first time, and A is a natural number; or
the target time is a quantity B of time units included in the second time, and B is a natural number.

In the resource obtaining apparatus in this embodiment of this application, the time units are symbols, slots, milliseconds, or frames.

In the resource obtaining apparatus in this embodiment of this application, a subcarrier spacing of the target time is a first subcarrier spacing or a second subcarrier spacing, where
the first subcarrier spacing is a subcarrier spacing of the first resource, and the second subcarrier spacing is a subcarrier spacing of the second resource.

In the resource obtaining apparatus in this embodiment of this application, the subcarrier spacing of the target time is a minimum subcarrier spacing in the first subcarrier spacing and the second subcarrier spacing; or
the subcarrier spacing of the target time is a maximum subcarrier spacing in the first subcarrier spacing and the second subcarrier spacing; or
the subcarrier spacing of the target time is a subcarrier spacing in a communications technology using an extended cyclic prefix ECP; or
the subcarrier spacing of the time unit is a subcarrier spacing corresponding to a communications technology used before the switching.

In the resource obtaining apparatus in this embodiment of this application, the guard period is a first guard period or a second guard period, where
the first guard period is a guard period of the first resource, and the second guard period is a guard period of the second resource.

In the resource obtaining apparatus in this embodiment of this application, the guard period is a minimum guard period in the first guard period and the second guard period; or
the guard period is a maximum guard period in the first guard period and the second guard period; or
the guard period is a guard period in a communications technology using an ECP; or
the guard period is a guard period corresponding to a communications technology used before the switching.

According to the resource obtaining apparatus in this embodiment of this application, a time interval between a first resource and a second resource corresponding to different communications technologies is greater than a target time, where the target time is determined according to a first time or a second time, the first time is a time required for switching between the different communications technologies, and the second time is a corresponding time obtained after a guard period is excluded from the first time. Therefore, it can be ensured that the resource interval between the first resource and the second resource is greater than the time required for switching between the different communications technologies, to avoid a transmission problem caused by technology switching and effectively ensure transmission quality of a high-priority communications technology.

The resource obtaining apparatus provided in this embodiment of this application can implement the processes implemented in the method embodiment in FIG. 2, and achieve a same technical effect. To avoid repetition, details are not described herein again.

It should be noted that the resource processing method provided in the embodiments of this application may be performed by a resource processing apparatus, or a control module that is in the resource processing apparatus and that is configured to perform the resource processing method. In the embodiments of this application, that the resource processing apparatus performs the resource processing method is used as an example to describe the resource processing apparatus provided in the embodiments of this application.

As shown in FIG. 10, an embodiment of this application further provides a resource processing apparatus 1000, applied to a communications device and including:
a first processing module 1001, configured to perform resource processing according to a preset processing rule in a case that a resource interval between a first resource and a second resource is less than a target time, where
the first resource and the second resource correspond to different communications technologies, the target time is determined according to a first time or a second time, the first time is a time required for switching between the different communications technologies, the second time is a corresponding time obtained after a target interval is excluded from the first time, the target interval includes at least one of a guard period, first N symbols of a target time unit, and an automatic gain control time, and N is a positive integer.

In the resource processing apparatus in this embodiment of this application, the first processing module is configured to perform at least one of the following:
excluding at least one of the first resource and the second resource from candidate resources or available resources;
dropping at least one of the first resource and the second resource;
canceling transmission on at least one of the first resource and the second resource; and
performing resource selection or resource reselection for at least one of a first communications technology and a second communications technology, where
the first communications technology is a communications technology corresponding to the first resource, and the second communications technology is a communications technology corresponding to the second resource.

The resource processing apparatus provided in this embodiment of this application can implement the processes implemented in the forgoing resource processing method embodiment, and achieve a same technical effect. To avoid repetition, details are not described herein again.

According to the resource processing apparatus in this embodiment of this application, in a case that a resource interval between a first resource and a second resource is less than a target time, a corresponding processing solution is provided to ensure transmission quality of a high-priority communications technology.

The resource processing apparatus provided in this embodiment of this application can implement the processes implemented in the method embodiment in FIG. 3, and achieve a same technical effect. To avoid repetition, details are not described herein again.

It should be noted that the resource obtaining method provided in the embodiments of this application may be performed by a resource obtaining apparatus, or a control module that is in the resource obtaining apparatus and that is configured to perform the resource obtaining method. In the embodiments of this application, that the resource obtaining apparatus performs the resource obtaining method is used as an example to describe the resource obtaining apparatus provided in the embodiments of this application.

As shown in FIG. 11, an embodiment of this application further provides a resource processing apparatus 1100, applied to a communications device and including:
a second processing module 1102, configured to process at least one of a first resource and a second resource according to a preset rule in a case that a first condition is met, where
the first condition includes any one of the following:
   that the first resource overlaps the second resource; and
   that the first resource and the second resource do not overlap and a resource interval between the first resource and the second resource is less than a target time, where
   the target time is determined according to a first time or a second time, the first time is a time required for switching between different communications technologies, the second time is a corresponding time obtained after a target interval is excluded from the first time, the target interval includes at least one of a guard period, first N symbols of a target time unit, and an automatic gain control time, and N is a positive integer; and
   the first resource is a resource of a first communications technology, and the second resource is a resource of a second communications technology.

In the resource processing apparatus in this embodiment of this application, that the first resource overlaps the second resource means that the first resource overlaps the second resource and a target time domain does not entirely covered by an overlapping resource, where the overlapping resource is an overlapping portion of the first resource and the second resource, and the target time domain is a time domain range to which the target time belongs.

In the resource processing apparatus in this embodiment of this application, the second processing module is configured to process at least one of the first resource and the second resource according to the preset rule based on a first priority, a second priority, and/or a third priority, where
the first priority is a priority of transmission in the first communications technology on an overlapping resource, and the overlapping resource is an overlapping portion of the first resource and the second resource;
the second priority is a priority of transmission in the first communications technology in a target time domain; and
the third priority is a priority of transmission in the second communications technology on the overlapping resource.

In the resource processing apparatus in this embodiment of this application, the second processing module is configured to process at least one of the first resource and the second resource according to the preset rule based on the first priority, the second priority, and/or the third priority in a case that a third target resource is the first resource, where
the third target resource is a resource before the overlapping resource.

In the resource processing apparatus in this embodiment of this application, the second processing module is configured to process at least one of the first resource and the second resource according to a first preset rule in a case that the first priority is higher than the third priority and/or the second priority is higher than the third priority, where
the first preset rule includes at least one of the following:
communications technology switching being performed within the overlapping resource or the second resource; and
first Q1 resources of the overlapping resource or first Q1 resources of the second resource being not used for first target transmission, where
the first target transmission is any transmission, or the first target transmission is transmission in the second communications technology.

In the resource processing apparatus in this embodiment of this application, the second processing module is configured to process at least one of the first resource and the second resource according to a second preset rule based on the first priority and/or the second priority in a case that transmission in the second communications technology on the overlapping resource meets a preset condition, where
the second preset rule includes at least one of the following:
communications technology switching being performed within the overlapping resource or the second resource; and
first Q2 resources of the overlapping resource or first Q2 resources of the second resource being not used for second target transmission, where
the second target transmission is any transmission, or the second target transmission is transmission in the second communications technology.

In the resource processing apparatus in this embodiment of this application, the second processing module is configured to process at least one of the first resource and the second resource according to a third preset rule in a case that both the first priority and the second priority are lower than the third priority, where
the third preset rule includes at least one of the following:
communications technology switching being performed within the first resource; and
first Q3 resources of the first resource or first Q3 resources of the overlapping resource being not used for third target transmission, where
the third target transmission is any transmission, or the third target transmission is transmission in the first communications technology.

In the resource processing apparatus in this embodiment of this application, the second processing module is configured to process at least one of the first resource and the second resource according to a fourth preset rule in a case that both transmission in the first communications technology on the overlapping resource and transmission in the target time domain in the second communications technology meet a preset condition, where
the fourth preset rule includes at least one of the following:
communications technology switching being performed within the first resource; and
first Q4 resources of the first resource or first Q4 resources of the overlapping resource being not used for fourth target transmission, where
the fourth target transmission is any transmission, or the fourth target transmission is transmission in the first communications technology.

In the resource processing apparatus in this embodiment of this application, the second processing module is configured to process at least one of the first resource and the second resource according to the preset rule based on a fourth priority, a fifth priority, and/or a sixth priority, where
the fourth priority is a priority of transmission on a fourth target resource, and the fourth target resource is the first resource before the second resource;
the fifth priority is a priority of transmission in a target time domain in the first communications technology, and the target time domain is a time domain range corresponding to the target time; and
the sixth priority is a priority of transmission on a fifth target resource, and the fifth target resource is the second resource after the first resource.

In the resource processing apparatus in this embodiment of this application, the second processing module is configured to process at least one of the first resource and the second resource according to the preset rule based on the fourth priority, the fifth priority, and the sixth priority in a case that the first resource is before the second resource and the resource interval between the first resource and the second resource is less than the target time.

In the resource processing apparatus in this embodiment of this application, the second processing module is configured to process at least one of the first resource and the second resource according to a fifth preset rule in a case that the fourth priority is higher than the sixth priority and/or the fifth priority is higher than the sixth priority, where
the fifth preset rule includes at least one of the following:
communications technology switching being performed within the second resource; and
W1 second resources after the first resource being not used for fifth target transmission, where
the fifth target transmission is any transmission, or the fifth target transmission is transmission in the second communications technology.

In the resource processing apparatus in this embodiment of this application, the second processing module is configured to process at least one of the first resource and the second resource according to a sixth preset rule based on the fourth priority and/or the fifth priority in a case that transmission on the fifth target resource meets a preset condition, where
the sixth preset rule includes at least one of the following:
communications technology switching being performed within the second resource; and
W2 second resources after the first resource being not used for sixth target transmission, where
the sixth target transmission is any transmission, or the sixth target transmission is transmission in the second communications technology.

In the resource processing apparatus in this embodiment of this application, the second processing module is configured to process at least one of the first resource and the second resource according to a seventh preset rule in a case that both the fourth priority and the fifth priority are lower than the sixth priority, where
the seventh preset rule includes at least one of the following:
communications technology switching being performed within a resource of the first communications technology; and
W3 first resources before the second resource being not used for seventh target transmission, where
the seventh target transmission is any transmission, or the seventh target transmission is transmission in the first communications technology.

In the resource processing apparatus in this embodiment of this application, the second processing module is configured to process at least one of the first resource and the second resource according to an eighth preset rule in a case that both transmission on the fourth target resource and transmission in the target time domain in the first communications technology meet a preset condition, where
the eighth preset rule includes at least one of the following:
communications technology switching being performed within a resource of the first communications technology; and
W4 first resources before the second resource being not used for eighth target transmission, where
the eighth target transmission is any transmission, or the eighth target transmission is transmission in the first communications technology.

In the resource processing apparatus in this embodiment of this application, the preset condition includes at least one of the following:
being corresponding to a grant resource that is not actually used in a third communications technology;
being corresponding to canceled transmission in the third communications technology;
being corresponding to transmission that meets the preset number of transmissions in the third communications technology; and
being corresponding to a target transmission type.

In the resource processing apparatus in this embodiment of this application, the target transmission type includes at least one of the following:
blind transmission;
blind retransmission;
transmission in which a hybrid automatic repeat request HARQ feedback is disabled;
broadcast transmission;
transmission in which a HARQ feedback is not supported; and
transmission in a resource pool or a BWP configured with no feedback channel resource.

According to the resource processing apparatus in this embodiment of this application, when a plurality of technologies need to be used for transmission, a corresponding transmission solution is determined according to priorities of transmission expected by the plurality of technologies on candidate resources and a priority corresponding to overheads of a switching period, to ensure transmission quality of a high-priority technology.

The resource obtaining apparatus or the resource processing apparatus in the embodiments of this application may be an apparatus, or may be a component, an integrated circuit, or a chip in a terminal. The apparatus may be a mobile terminal, or a non-mobile terminal. For example, the mobile device may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The resource obtaining apparatus or the resource processing apparatus in the embodiments of this application may be an apparatus with an operating system. The operating system may be an Android (Android) operating system, an iOS operating system, or another possible operating system. This is not specifically limited in the embodiments of this application.

The resource processing apparatus provided in this embodiment of this application can implement the processes implemented in the method embodiments in FIG. 4 to FIG.8, and achieve a same technical effect. To avoid repetition, details are not described herein again.

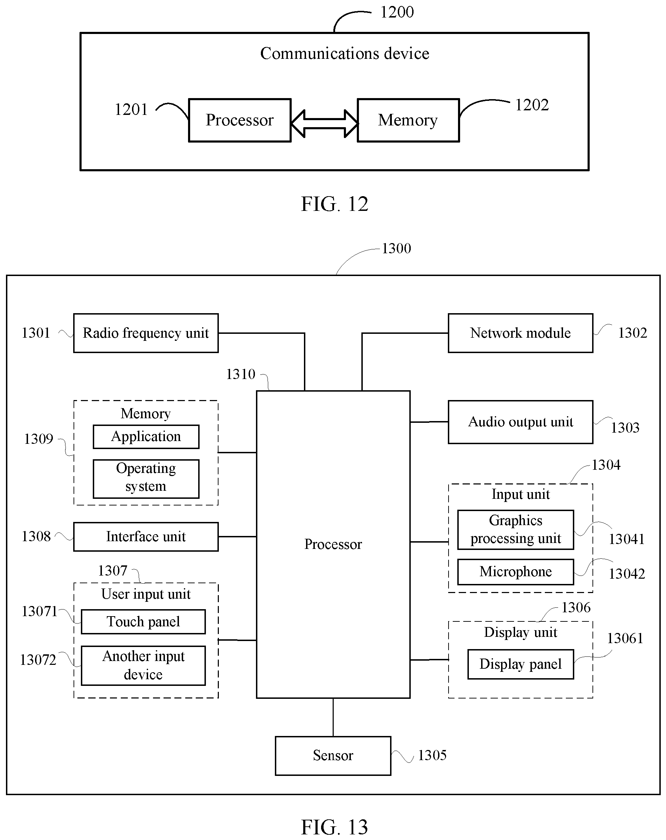

Optionally, as shown in FIG. 12, an embodiment of this application further provides a communications device 1200, including a processor 1201, a memory 1202, and a program or an instruction stored in the memory 1202 and executable on the processor 1201. For example, when the communications device 1200 is a terminal, the program or the instruction is executed by the processor 1201 to implement the processing of the foregoing resource obtaining method or resource processing method embodiment, and a same technical effect can be achieved. When the communications device 1200 is a network side device, the program or the instruction is executed by the processor 1201 to implement the processing of the foregoing resource obtaining method or resource processing method embodiment, and a same technical effect can be achieved. To avoid repetition, details are not described herein again.

FIG. 13 is a schematic structural diagram of hardware of a communications device according to an embodiment of this application. The communications device is specifically a terminal.

A terminal 1300 includes but is not limited to components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art can understand that the terminal 1300 may further include a power supply (such as a battery) that supplies power to each component. The power supply may be logically connected to the processor 1310 by using a power supply management system, to implement functions such as charging and discharging management, and power consumption management by using the power supply management system. The terminal structure shown in FIG. 13 constitutes no limitation on the terminal, and the terminal may include more or fewer components than those shown in the figure, or combine some components, or have different component arrangements. Details are not described herein.

It should be understood that, in this embodiment of this application, the input unit 1304 may include a graphics processing unit (Graphics Processing Unit, GPU) 13041 and a microphone 13042, and the graphics processing unit 13041 processes image data of a still picture or a video obtained by an image capture apparatus (such as a camera) in a video capture mode or an image capture mode. The display unit 1306 may include a display panel 13061. Optionally, the display panel 13061 may be configured in a form such as a liquid crystal display or an organic light-emitting diode. The user input unit 1307 includes a touch panel 13071 and another input device 13072. The touch panel 13071 is also referred to as a touchscreen. The touch panel 13071 may include two parts: a touch detection apparatus and a touch controller. The another input device 13072 may include but is not limited to a physical keyboard, a functional button (such as a volume control button or a power on/off button), a trackball, a mouse, and a joystick. Details are not described herein.

In this embodiment of this application, the radio frequency unit 1301 receives downlink data from a network side device and then sends the downlink data to the processor 1310 for processing; and sends uplink data to the network side device. Usually, the radio frequency unit 1301 includes but is not limited to an antenna, at least one amplifier, a transceiver, a coupler, a low noise amplifier, a duplexer, and the like.

The memory 1309 may be configured to store a software program or an instruction and various data. The memory 1309 may mainly include a program or instruction storage area and a data storage area. The program or instruction storage area may store an operating system, and an application or an instruction required by at least one function (for example, a sound playing function or an image playing function). In addition, the memory 1309 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1310 may include one or more processing units. Optionally, an application processor and a modem processor may be integrated into the processor 1310. The application processor mainly processes an operating system, a user interface, an application, an instruction, or the like. The modem processor mainly processes wireless communications, for example, a baseband processor. It can be understood that, alternatively, the modem processor may not be integrated into the processor 1310.

In an embodiment of this application, the processor 1310 is configured to obtain a target resource, where the target resource includes at least one of a first resource and a second resource;
the first resource corresponds to a first communications technology, the second resource corresponds to a second communications technology, and a resource interval between the first resource and the second resource is greater than or equal to a target time; and
the target time is determined according to a first time or a second time, the first time is a time required for switching between the first communications technology and the second communications technology, the second time is a corresponding time obtained after a target interval is excluded from the first time, the target interval includes at least one of a guard period, first N symbols of a target time unit, and an automatic gain control time, and N is a positive integer.

Optionally, the first resource and the second resource are adjacent resources; or
the first resource is any resource of the first communications technology, and the second resource is any resource of the second communications technology.

Optionally, the processor 1310 is further configured to obtain at least one of the first resource and the second resource through resource selection or resource reselection.

Optionally, the processor 1310 is further configured to perform resource selection or resource reselection in an obtained resource.

Optionally, the obtained resource includes at least one of the following:
a selected resource;
a reserved resource;
a reselected resource;
a recommended resource;
a resource indicated to another user; and
a preempted resource.

Optionally, the processor 1310 is further configured to configure at least one of the first resource and the second resource.

Optionally, the target time is a quantity A of time units included in the first time, and A is a natural number; or
the target time is a quantity B of time units included in the second time, and B is a natural number.

Optionally, the time units are symbols, slots, milliseconds, or frames.

Optionally, a subcarrier spacing of the target time is a first subcarrier spacing or a second subcarrier spacing, where
the first subcarrier spacing is a subcarrier spacing of the first resource, and the second subcarrier spacing is a subcarrier spacing of the second resource.

Optionally, the subcarrier spacing of the target time is a minimum subcarrier spacing in the first subcarrier spacing and the second subcarrier spacing; or
the subcarrier spacing of the target time is a maximum subcarrier spacing in the first subcarrier spacing and the second subcarrier spacing; or
the subcarrier spacing of the target time is a subcarrier spacing in a communications technology using an extended cyclic prefix ECP; or
the subcarrier spacing of the time unit is a subcarrier spacing corresponding to a communications technology used before the switching.

Optionally, the guard period is a first guard period or a second guard period, where
the first guard period is a guard period of the first resource, and the second guard period is a guard period of the second resource.

Optionally, the guard period is a minimum guard period in the first guard period and the second guard period; or
the guard period is a maximum guard period in the first guard period and the second guard period; or
the guard period is a guard period in a communications technology using an ECP; or
the guard period is a guard period corresponding to a communications technology used before the switching.

According to the communications device in this embodiment of this application, a time interval between a first resource and a second resource corresponding to different communications technologies is greater than a target time, where the target time is determined according to a first time or a second time, the first time is a time required for switching between the different communications technologies, and the second time is a corresponding time obtained after a guard period is excluded from the first time. Therefore, it can be ensured that the resource interval between the first resource and the second resource is greater than the time required for switching between the different communications technologies, to avoid a transmission problem caused by technology switching and effectively ensure transmission quality of a high-priority communications technology.

In another embodiment of this application, the processor 1310 is configured to perform resource processing according to a preset processing rule in a case that a resource interval between a first resource and a second resource is less than a target time, where
the first resource and the second resource correspond to different communications technologies, the target time is determined according to a first time or a second time, the first time is a time required for switching between the different communications technologies, the second time is a corresponding time obtained after a target interval is excluded from the first time, the target interval includes at least one of a guard period, first N symbols of a target time unit, and an automatic gain control time, and N is a positive integer.

Optionally, the performing resource processing according to a preset processing rule includes at least one of the following:
excluding at least one of the first resource and the second resource from candidate resources or available resources;
dropping at least one of the first resource and the second resource;
canceling transmission on at least one of the first resource and the second resource; and
performing resource selection or resource reselection for at least one of a first communications technology and a second communications technology, where
the first communications technology is a communications technology corresponding to the first resource, and the second communications technology is a communications technology corresponding to the second resource.

According to the communications device in this embodiment of this application, in a case that a resource interval between a first resource and a second resource is less than a target time, a corresponding processing solution is provided to ensure transmission quality of a high-priority communications technology.

In still another embodiment of this application, the processor 1310 is configured to process at least one of a first resource and a second resource according to a preset rule in a case that a first condition is met, where
the first condition includes any one of the following:
that the first resource overlaps the second resource; and
that the first resource and the second resource do not overlap and a resource interval between the first resource and the second resource is less than a target time, where
the target time is determined according to a first time or a second time, the first time is a time required for switching between different communications technologies, the second time is a corresponding time obtained after a target interval is excluded from the first time, the target interval includes at least one of a guard period, first N symbols of a target time unit, and an automatic gain control time, and N is a positive integer; and
the first resource is a resource of a first communications technology, and the second resource is a resource of a second communications technology.

Optionally, that the first resource overlaps the second resource means that the first resource overlaps the second resource and a target time domain does not entirely covered by an overlapping resource, where the overlapping resource is an overlapping portion of the first resource and the second resource, and the target time domain is a time domain range to which the target time belongs.

Optionally, the processor 1310 is further configured to process at least one of the first resource and the second resource according to the preset rule based on a first priority, a second priority, and/or a third priority, where
the first priority is a priority of transmission in the first communications technology on an overlapping resource, and the overlapping resource is an overlapping portion of the first resource and the second resource;
the second priority is a priority of transmission in the first communications technology in a target time domain; and
the third priority is a priority of transmission in the second communications technology on the overlapping resource.

Optionally, the processor 1310 is further configured to process at least one of the first resource and the second resource according to the preset rule based on the first priority, the second priority, and/or the third priority in a case that a third target resource is the first resource, where
the third target resource is a resource before the overlapping resource.

Optionally, the processor 1310 is further configured to process at least one of the first resource and the second resource according to a first preset rule in a case that the first priority is higher than the third priority and/or the second priority is higher than the third priority, where
the first preset rule includes at least one of the following:
communications technology switching being performed within the overlapping resource or the second resource; and
first Q1 resources of the overlapping resource or first Q1 resources of the second resource being not used for first target transmission, where
the first target transmission is any transmission, or the first target transmission is transmission in the second communications technology.

Optionally, the processor 1310 is further configured to process at least one of the first resource and the second resource according to a second preset rule based on the first priority and/or the second priority in a case that transmission in the second communications technology on the overlapping resource meets a preset condition, where
the second preset rule includes at least one of the following:
communications technology switching being performed within the overlapping resource or the second resource; and
first Q2 resources of the overlapping resource or first Q2 resources of the second resource being not used for second target transmission, where
the second target transmission is any transmission, or the second target transmission is transmission in the second communications technology.

Optionally, the processor 1310 is further configured to process at least one of the first resource and the second resource according to a third preset rule in a case that both the first priority and the second priority are lower than the third priority, where
the third preset rule includes at least one of the following:
communications technology switching being performed within the first resource; and
first Q3 resources of the first resource or first Q3 resources of the overlapping resource being not used for third target transmission, where
the third target transmission is any transmission, or the third target transmission is transmission in the first communications technology.

Optionally, the processor 1310 is further configured to process at least one of the first resource and the second resource according to a fourth preset rule in a case that both transmission in the first communications technology on the overlapping resource and transmission in the target time domain in the second communications technology meet a preset condition, where
the fourth preset rule includes at least one of the following:
communications technology switching being performed within the first resource; and
first Q4 resources of the first resource or first Q4 resources of the overlapping resource being not used for fourth target transmission, where
the fourth target transmission is any transmission, or the fourth target transmission is transmission in the first communications technology.

Optionally, the processor 1310 is further configured to process at least one of the first resource and the second resource according to the preset rule based on a fourth priority, a fifth priority, and/or a sixth priority, where
the fourth priority is a priority of transmission on a fourth target resource, and the fourth target resource is the first resource before the second resource;
the fifth priority is a priority of transmission in a target time domain in the first communications technology, and the target time domain is a time domain range corresponding to the target time; and
the sixth priority is a priority of transmission on a fifth target resource, and the fifth target resource is the second resource after the first resource.

Optionally, the processor 1310 is further configured to process at least one of the first resource and the second resource according to the preset rule based on the fourth priority, the fifth priority, and the sixth priority in a case that the first resource is before the second resource and the resource interval between the first resource and the second resource is less than the target time.

Optionally, the processor 1310 is further configured to process at least one of the first resource and the second resource according to a fifth preset rule in a case that the fourth priority is higher than the sixth priority and/or the fifth priority is higher than the sixth priority, where
the fifth preset rule includes at least one of the following:
communications technology switching being performed within the second resource; and
W1 second resources after the first resource being not used for fifth target transmission, where
the fifth target transmission is any transmission, or the fifth target transmission is transmission in the second communications technology.

Optionally, the processor 1310 is further configured to process at least one of the first resource and the second resource according to a sixth preset rule based on the fourth priority and/or the fifth priority in a case that transmission on the fifth target resource meets a preset condition, where
the sixth preset rule includes at least one of the following:
communications technology switching being performed within the second resource; and
W2 second resources after the first resource being not used for sixth target transmission, where
the sixth target transmission is any transmission, or the sixth target transmission is transmission in the second communications technology.

Optionally, the processor 1310 is further configured to process at least one of the first resource and the second resource according to a seventh preset rule in a case that both the fourth priority and the fifth priority are lower than the sixth priority, where
the seventh preset rule includes at least one of the following:
communications technology switching being performed within a resource of the first communications technology; and
W3 first resources before the second resource being not used for seventh target transmission, where
the seventh target transmission is any transmission, or the seventh target transmission is transmission in the first communications technology.

Optionally, the processor 1310 is further configured to process at least one of the first resource and the second resource according to an eighth preset rule in a case that both transmission on the fourth target resource and transmission in the target time domain in the first communications technology meet a preset condition, where
the eighth preset rule includes at least one of the following:
communications technology switching being performed within a resource of the first communications technology; and
W4 first resources before the second resource being not used for eighth target transmission, where
the eighth target transmission is any transmission, or the eighth target transmission is transmission in the first communications technology.

Optionally, the preset condition includes at least one of the following:
being corresponding to a grant resource that is not actually used in a third communications technology;
being corresponding to canceled transmission in the third communications technology;
being corresponding to transmission that meets the preset number of transmissions in the third communications technology; and
being corresponding to a target transmission type.

Optionally, the target transmission type includes at least one of the following:
blind transmission;
blind retransmission;
transmission in which a hybrid automatic repeat request HARQ feedback is disabled;
broadcast transmission;
transmission in which a HARQ feedback is not supported; and
transmission in a resource pool or a BWP configured with no feedback channel resource.

According to the communications device in this embodiment of this application, when a plurality of technologies need to be used for transmission, a corresponding transmission solution is determined according to priorities of transmission expected by the plurality of technologies on candidate resources and a priority corresponding to overheads of a switching period, to ensure transmission quality of a high-priority technology.

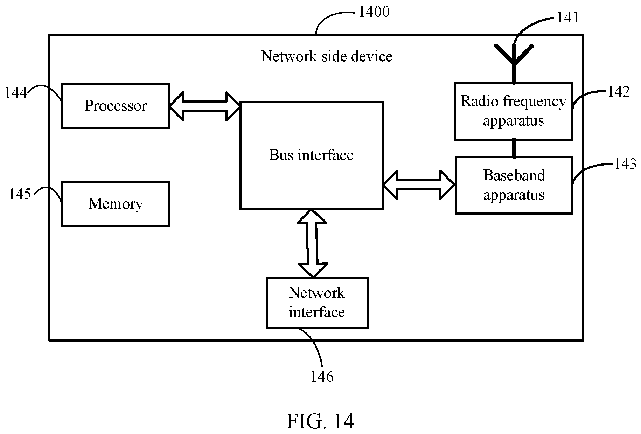

Specifically, an embodiment of this application further provides a communications device, and the communications device is specifically a network side device. As shown in FIG. 14, a network side device 1400 includes an antenna 141, a radio frequency apparatus 142, and a baseband apparatus 143. The antenna 141 is connected to the radio frequency apparatus 142. In an uplink direction, the radio frequency apparatus 142 receives information by using the antenna 141, and sends the received information to the baseband apparatus 143 for processing. In a downlink direction, the baseband apparatus 143 processes information that needs to be sent, and sends processed information to the radio frequency apparatus 142. The radio frequency apparatus 142 processes the received information, and sends processed information by using the antenna 141.

The frequency band processing apparatus may be located in the baseband apparatus 143. The method performed by the network side device in the foregoing embodiment may be implemented in the baseband apparatus 143. The baseband apparatus 143 includes a processor 144 and a memory 145.

The baseband apparatus 143 may include, for example, at least one baseband board, where a plurality of chips are disposed on the baseband board. As shown in FIG. 14, one chip is, for example, the processor 144, which is connected to the memory 145, so as to invoke a program in the memory 145 to perform operations of the network device shown in the foregoing method embodiment.

The baseband apparatus 143 may further include a network interface 146, configured to exchange information with the radio frequency apparatus 142. For example, the interface is a common public radio interface (common public radio interface, CPRI).

Specifically, the network side device in this embodiment of the present invention further includes an instruction or a program stored in the memory 145 and executable on the processor 144. The processor 144 invokes the instruction or the program in the memory 145 to perform the method performed by the modules shown in FIG. 9 or FIG. 11, and a same technical effect is achieved. To avoid repetition, details are not described herein again.

An embodiment of this application further provides a readable storage medium. The readable storage medium stores a program or an instruction, and when the program or the instruction is executed by a processor, the processes of the foregoing resource obtaining method or resource processing method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to execute a program or an instruction on a network side device to implement the processes of the foregoing resource obtaining method or resource processing method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application defined by the appended claims.

## Claims

1. A resource processing method, performed by a communications device (11, 12) and comprising:
processing at least one of a first resource and a second resource according to a priority preset processing rule in a case that a first condition is met, to not abandon, not invalidate or not delay a higher-priority transmission,
**characterized in that**,
the first condition comprises any one of:
that the first resource overlaps the second resource; and
that the first resource and the second resource do not overlap and a resource interval between the first resource and the second resource is less than a target time, wherein
the target time is determined according to a second time, the second time is a corresponding time obtained after a target interval is excluded from a first time, the first time is a time required for switching between different communications technologies, the target interval comprises at least one of first N symbols of a target time unit, and an automatic gain control time, and N is a positive integer; and
the first resource is a resource of a first communications technology, and the second resource is a resource of a second communications technology.

2. The resource processing method according to claim 1, wherein that the first resource overlaps the second resource means that the first resource overlaps the second resource and a target time domain does not entirely covered by an overlapping resource, wherein the overlapping resource is an overlapping portion of the first resource and the second resource, and the target time domain is a time domain range to which the target time belongs.

3. The resource processing method according to claim 1, wherein the processing at least one of a first resource and a second resource according to a priority preset processing rule in a case that a first condition is met comprises:
processing at least one of the first resource and the second resource according to the priority preset processing rule based on a first priority, a second priority, and/or a third priority, wherein
the first priority is a priority of transmission in the first communications technology on an overlapping resource, and the overlapping resource is an overlapping portion of the first resource and the second resource;
the second priority is a priority of transmission in the first communications technology in a target time domain, and the target time domain is a time domain range corresponding to the target time; and
the third priority is a priority of transmission in the second communications technology on the overlapping resource.

4. The resource processing method according to claim 3, wherein the processing at least one of the first resource and the second resource according to the priority preset processing rule based on a first priority, a second priority, and/or a third priority comprises:
processing at least one of the first resource and the second resource according to the priority preset processing rule based on the first priority, the second priority, and/or the third priority in a case that a third target resource is the first resource, wherein
the third target resource is a resource before the overlapping resource;
or
processing at least one of the first resource and the second resource according to a first preset rule in a case that the first priority is higher than the third priority and/or the second priority is higher than the third priority, wherein
the first preset rule comprises at least one of:
communications technology switching being performed within the overlapping resource or the second resource; and
first Q1 resources of the overlapping resource or first Q1 resources of the second resource being not used for first target transmission, wherein
the first target transmission is any transmission, or the first target transmission is transmission in the second communications technology;
or
processing at least one of the first resource and the second resource according to a second preset rule based on the first priority and/or the second priority in a case that transmission in the second communications technology on the overlapping resource meets a preset condition, wherein
the second preset rule comprises at least one of:
communications technology switching being performed within the overlapping resource or the second resource; and
first Q2 resources of the overlapping resource or first Q2 resources of the second resource being not used for second target transmission, wherein
the second target transmission is any transmission, or the second target transmission is transmission in the second communications technology;
or
processing at least one of the first resource and the second resource according to a third preset rule in a case that both the first priority and the second priority are lower than the third priority, wherein
the third preset rule comprises at least one of:
communications technology switching being performed within the first resource; and
first Q3 resources of the first resource or first Q3 resources of the overlapping resource being not used for third target transmission, wherein
the third target transmission is any transmission, or the third target transmission is transmission in the first communications technology;
or
processing at least one of the first resource and the second resource according to a fourth preset rule in a case that both transmission in the first communications technology on the overlapping resource and transmission in the target time domain in the first communications technology meet a preset condition, wherein
the fourth preset rule comprises at least one of:
communications technology switching being performed within the first resource; and
first Q4 resources of the first resource or first Q4 resources of the overlapping resource being not used for fourth target transmission, wherein
the fourth target transmission is any transmission, or the fourth target transmission is transmission in the first communications technology.

5. The resource processing method according to claim 1, wherein the processing at least one of a first resource and a second resource according to a priority preset processing rule in a case that a first condition is met comprises:
processing at least one of the first resource and the second resource according to the priority preset processing rule based on a fourth priority, a fifth priority, and/or a sixth priority, wherein
the fourth priority is a priority of transmission on a fourth target resource, and the fourth target resource is the first resource before the second resource;
the fifth priority is a priority of transmission in a target time domain in the first communications technology, and the target time domain is a time domain range corresponding to the target time; and
the sixth priority is a priority of transmission on a fifth target resource, and the fifth target resource is the second resource after the first resource.

6. The resource processing method according to claim 5, wherein the processing at least one of the first resource and the second resource according to the priority preset processing rule based on a fourth priority, a fifth priority, and/or a sixth priority comprises:
processing at least one of the first resource and the second resource according to the priority preset processing rule based on the fourth priority, the fifth priority, and the sixth priority in a case that the first resource is before the second resource and the resource interval between the first resource and the second resource is less than the target time;
or
processing at least one of the first resource and the second resource according to a fifth preset rule in a case that the fourth priority is higher than the sixth priority and/or the fifth priority is higher than the sixth priority, wherein
the fifth preset rule comprises at least one of:
communications technology switching being performed within the second resource; and
W1 second resources after the first resource being not used for fifth target transmission, wherein
the fifth target transmission is any transmission, or the fifth target transmission is transmission in the second communications technology;
or
processing at least one of the first resource and the second resource according to a sixth preset rule based on the fourth priority and/or the fifth priority in a case that transmission on the fifth target resource meets a preset condition, wherein
the sixth preset rule comprises at least one of:
communications technology switching being performed within the second resource; and
W2 second resources after the first resource being not used for sixth target transmission, wherein
the sixth target transmission is any transmission, or the sixth target transmission is transmission in the second communications technology;
or
processing at least one of the first resource and the second resource according to a seventh preset rule in a case that both the fourth priority and the fifth priority are lower than the sixth priority, wherein
the seventh preset rule comprises at least one of:
communications technology switching being performed within a resource of the first communications technology; and
W3 first resources before the second resource being not used for seventh target transmission, wherein
the seventh target transmission is any transmission, or the seventh target transmission is transmission in the first communications technology;
or
processing at least one of the first resource and the second resource according to an eighth preset rule in a case that both transmission on the fourth target resource and transmission in the target time domain in the first communications technology meet a preset condition, wherein
the eighth preset rule comprises at least one of:
communications technology switching being performed within a resource of the first communications technology; and
W4 first resources before the second resource being not used for eighth target transmission, wherein
the eighth target transmission is any transmission, or the eighth target transmission is transmission in the first communications technology.

7. A communications device (1200), comprising a processor (1201), a memory (1202), and a program or an instruction stored in the memory (1202) and executable on the processor (1201), wherein when the program or the instruction is executed by the processor (1201), steps of the resource processing method according to any one of claims 1 to 6 are implemented.

8. A readable storage medium, wherein the readable storage medium stores a program or an instruction, and when the program or the instruction is executed by a processor comprised in a communication device (1200), steps of the resource processing method according to any one of claims 1 to 6 are implemented.

## Patentansprüche

1. Ein Ressourcenverarbeitungsverfahren, das von einer Kommunikationsvorrichtung (11, 12) durchgeführt wird und Folgendes beinhaltet:
Verarbeiten von mindestens einer von einer ersten Ressource und einer zweiten Ressource gemäß einer voreingestellten Prioritätsverarbeitungsregel in einem Fall,
dass eine erste Bedingung erfüllt ist, um eine Übertragung höherer Priorität nicht abzubrechen, nicht ungültig zu machen oder nicht zu verzögern,
**dadurch gekennzeichnet, dass**
die erste Bedingung eines der Folgenden beinhaltet:
dass die erste Ressource die zweite Ressource überlappt; und
dass sich die erste Ressource und die zweite Ressource nicht überlappen und ein Ressourcenintervall zwischen der ersten Ressource und der zweiten Ressource kleiner als eine Zielzeit ist, wobei
die Zielzeit gemäß einer zweiten Zeit bestimmt wird, die zweite Zeit eine entsprechende Zeit ist, die erhalten wird, nachdem ein Zielintervall von einer ersten Zeit ausgeschlossen wurde, die erste Zeit eine Zeit ist, die zum Umschalten zwischen unterschiedlichen Kommunikationstechnologien erforderlich ist, das Zielintervall mindestens eines von ersten N Symbolen einer Zielzeiteinheit und einer automatischen Verstärkungsregelungszeit beinhaltet und N eine positive ganze Zahl ist; und
die erste Ressource eine Ressource einer ersten Kommunikationstechnologie ist und die zweite Ressource eine Ressource einer zweiten Kommunikationstechnologie ist.

2. Ressourcenverarbeitungsverfahren gemäß Anspruch 1, wobei, dass die erste Ressource die zweite Ressource überlappt, bedeutet, dass die erste Ressource die zweite Ressource überlappt und ein Zielzeitbereich nicht vollständig von einer überlappenden Ressource abgedeckt wird, wobei die überlappende Ressource ein überlappender Teil der ersten Ressource und der zweiten Ressource ist und der Zielzeitbereich eine Zeitbereichsspanne ist, zu der die Zielzeit gehört.

3. Ressourcenverarbeitungsverfahren gemäß Anspruch 1, wobei das Verarbeiten von mindestens einer von einer ersten Ressource und einer zweiten Ressource gemäß einer voreingestellten Prioritätsverarbeitungsregel in einem Fall, dass eine erste Bedingung erfüllt ist, Folgendes beinhaltet:
Verarbeiten von mindestens einer von der ersten Ressource und der zweiten Ressource gemäß der voreingestellten Prioritätsverarbeitungsregel auf der Basis einer ersten Priorität, einer zweiten Priorität und/oder einer dritten Priorität, wobei die erste Priorität eine Priorität der Übertragung in der ersten
Kommunikationstechnologie auf einer überlappenden Ressource ist und die überlappende Ressource ein überlappender Teil der ersten Ressource und der zweiten Ressource ist;
die zweite Priorität eine Priorität der Übertragung in der ersten Kommunikationstechnologie in einem Zielzeitbereich ist und der Zielzeitbereich eine Zeitbereichsspanne ist, die der Zielzeit entspricht; und
die dritte Priorität eine Priorität der Übertragung in der zweiten Kommunikationstechnologie auf der überlappenden Ressource ist.

4. Ressourcenverarbeitungsverfahren gemäß Anspruch 3, wobei das Verarbeiten von mindestens einer von der ersten Ressource und der zweiten Ressource gemäß der voreingestellten Prioritätsverarbeitungsregel auf der Basis einer ersten Priorität, einer zweiten Priorität und/oder einer dritten Priorität Folgendes beinhaltet:
Verarbeiten von mindestens einer von der ersten Ressource und der zweiten Ressource gemäß der voreingestellten Prioritätsverarbeitungsregel auf der Basis der ersten Priorität, der zweiten Priorität und/oder der dritten Priorität in einem Fall, dass eine dritte Zielressource die erste Ressource ist, wobei
die dritte Zielressource eine Ressource vor der überlappenden Ressource ist;
oder
Verarbeiten von mindestens einer von der ersten Ressource und der zweiten Ressource gemäß einer ersten voreingestellten Regel in einem Fall, dass die erste Priorität höher als die dritte Priorität ist und/oder die zweite Priorität höher als die dritte Priorität ist, wobei
die erste voreingestellte Regel mindestens eines der Folgenden beinhaltet:
dass eine Kommunikationstechnologieumschaltung innerhalb der überlappenden Ressource oder der zweiten Ressource durchgeführt wird; und
dass erste Q1-Ressourcen der überlappenden Ressource oder erste Q1-Ressourcen der zweiten Ressource nicht für eine erste Zielübertragung verwendet werden, wobei die erste Zielübertragung eine beliebige Übertragung ist oder die erste Zielübertragung eine Übertragung in der zweiten Kommunikationstechnologie ist;
oder
Verarbeiten von mindestens einer von der ersten Ressource und der zweiten Ressource gemäß einer zweiten voreingestellten Regel auf der Basis der ersten Priorität und/oder der zweiten Priorität in einem Fall, dass die Übertragung in der zweiten Kommunikationstechnologie auf der überlappenden Ressource eine voreingestellte Bedingung erfüllt, wobei
die zweite voreingestellte Regel mindestens eines der Folgenden beinhaltet:
dass eine Kommunikationstechnologieumschaltung innerhalb der überlappenden Ressource oder der zweiten Ressource durchgeführt wird; und
dass erste Q2-Ressourcen der überlappenden Ressource oder erste Q2-Ressourcen der zweiten Ressource nicht für eine zweite Zielübertragung verwendet werden, wobei die zweite Zielübertragung eine beliebige Übertragung ist oder die zweite Zielübertragung eine Übertragung in der zweiten Kommunikationstechnologie ist;
oder
Verarbeiten von mindestens einer von der ersten Ressource und der zweiten Ressource gemäß einer dritten voreingestellten Regel in einem Fall, dass sowohl die erste Priorität als auch die zweite Priorität niedriger als die dritte Priorität sind, wobei die dritte voreingestellte Regel mindestens eines der Folgenden beinhaltet:
dass eine Kommunikationstechnologieumschaltung innerhalb der ersten Ressource durchgeführt wird; und
dass erste Q3-Ressourcen der ersten Ressource oder erste Q3-Ressourcen der überlappenden Ressource nicht für eine dritte Zielübertragung verwendet werden, wobei
die dritte Zielübertragung eine beliebige Übertragung ist oder die dritte Zielübertragung eine Übertragung in der ersten Kommunikationstechnologie ist;
oder
Verarbeiten von mindestens einer von der ersten Ressource und der zweiten Ressource gemäß einer vierten voreingestellten Regel in einem Fall, dass sowohl die Übertragung in der ersten Kommunikationstechnologie auf der überlappenden Ressource als auch die Übertragung im Zielzeitbereich in der ersten Kommunikationstechnologie eine voreingestellte Bedingung erfüllen, wobei die vierte voreingestellte Regel mindestens eines der Folgenden beinhaltet:
dass eine Kommunikationstechnologieumschaltung innerhalb der ersten Ressource durchgeführt wird; und
dass erste Q4-Ressourcen der ersten Ressource oder erste Q4-Ressourcen der überlappenden Ressource nicht für eine vierte Zielübertragung verwendet werden, wobei
die vierte Zielübertragung eine beliebige Übertragung ist oder die vierte Zielübertragung eine Übertragung in der ersten Kommunikationstechnologie ist.

5. Ressourcenverarbeitungsverfahren gemäß Anspruch 1, wobei das Verarbeiten von mindestens einer von einer ersten Ressource und einer zweiten Ressource gemäß einer voreingestellten Prioritätsverarbeitungsregel in einem Fall, dass eine erste Bedingung erfüllt ist, Folgendes beinhaltet:
Verarbeiten von mindestens einer von der ersten Ressource und der zweiten Ressource gemäß der voreingestellten Prioritätsverarbeitungsregel auf der Basis einer vierten Priorität, einer fünften Priorität und/oder einer sechsten Priorität, wobei die vierte Priorität eine Priorität der Übertragung auf einer vierten Zielressource ist und die vierte Zielressource die erste Ressource vor der zweiten Ressource ist;
die fünfte Priorität eine Priorität der Übertragung in einem Zielzeitbereich in der ersten Kommunikationstechnologie ist und der Zielzeitbereich eine Zeitbereichsspanne ist, die der Zielzeit entspricht; und
die sechste Priorität eine Priorität der Übertragung auf einer fünften Zielressource ist und die fünfte Zielressource die zweite Ressource nach der ersten Ressource ist.

6. Ressourcenverarbeitungsverfahren gemäß Anspruch 5, wobei das Verarbeiten von mindestens einer von der ersten Ressource und der zweiten Ressource gemäß der voreingestellten Prioritätsverarbeitungsregel auf der Basis einer vierten Priorität, einer fünften Priorität und/oder einer sechsten Priorität Folgendes beinhaltet:
Verarbeiten von mindestens einer von der ersten Ressource und der zweiten Ressource gemäß der voreingestellten Prioritätsverarbeitungsregel auf der Basis der vierten Priorität, der fünften Priorität und der sechsten Priorität in einem Fall, dass die erste Ressource vor der zweiten Ressource liegt und das Ressourcenintervall zwischen der ersten Ressource und der zweiten Ressource kleiner als die Zielzeit ist;
oder
Verarbeiten von mindestens einer von der ersten Ressource und der zweiten Ressource gemäß einer fünften voreingestellten Regel in einem Fall, dass die vierte Priorität höher als die sechste Priorität ist und/oder die fünfte Priorität höher als die sechste Priorität ist, wobei
die fünfte voreingestellte Regel mindestens eines der Folgenden beinhaltet:
dass eine Kommunikationstechnologieumschaltung innerhalb der zweiten Ressource durchgeführt wird; und
dass W1 zweite Ressourcen nach der ersten Ressource nicht für eine fünfte Zielübertragung verwendet werden, wobei
die fünfte Zielübertragung eine beliebige Übertragung ist oder die fünfte Zielübertragung eine Übertragung in der zweiten Kommunikationstechnologie ist;
oder
Verarbeiten von mindestens einer von der ersten Ressource und der zweiten Ressource gemäß einer sechsten voreingestellten Regel auf der Basis der vierten Priorität und/oder der fünften Priorität in einem Fall, dass die Übertragung auf der fünften Zielressource eine voreingestellte Bedingung erfüllt, wobei die sechste voreingestellte Regel mindestens eines der Folgenden beinhaltet:
dass eine Kommunikationstechnologieumschaltung innerhalb der zweiten Ressource durchgeführt wird; und
dass W2 zweite Ressourcen nach der ersten Ressource nicht für eine sechste Zielübertragung verwendet werden, wobei
die sechste Zielübertragung eine beliebige Übertragung ist oder die sechste Zielübertragung eine Übertragung in der zweiten Kommunikationstechnologie ist;
oder
Verarbeiten von mindestens einer von der ersten Ressource und der zweiten Ressource gemäß einer siebten voreingestellten Regel in einem Fall, dass sowohl die vierte Priorität als auch die fünfte Priorität niedriger als die sechste Priorität sind, wobei die siebte voreingestellte Regel mindestens eines der Folgenden beinhaltet:
dass eine Kommunikationstechnologieumschaltung innerhalb einer Ressource der ersten Kommunikationstechnologie durchgeführt wird; und
dass W3 erste Ressourcen vor der zweiten Ressource nicht für eine siebte Zielübertragung verwendet werden, wobei
die siebte Zielübertragung eine beliebige Übertragung ist oder die siebte Zielübertragung eine Übertragung in der ersten Kommunikationstechnologie ist;
oder
Verarbeiten von mindestens einer von der ersten Ressource und der zweiten Ressource gemäß einer achten voreingestellten Regel in einem Fall, dass sowohl die Übertragung auf der vierten Zielressource als auch die Übertragung im Zielzeitbereich in der ersten Kommunikationstechnologie eine voreingestellte Bedingung erfüllen,
wobei
die achte voreingestellte Regel mindestens eines der Folgenden beinhaltet:
dass eine Kommunikationstechnologieumschaltung innerhalb einer Ressource der ersten Kommunikationstechnologie durchgeführt wird; und
dass W4 erste Ressourcen vor der zweiten Ressource nicht für eine achte Zielübertragung verwendet werden, wobei
die achte Zielübertragung eine beliebige Übertragung ist oder die achte Zielübertragung eine Übertragung in der ersten Kommunikationstechnologie ist.

7. Eine Kommunikationsvorrichtung (1200), die einen Prozessor (1201), einen Speicher (1202) und ein Programm oder eine Anweisung, das/die in dem Speicher (1202) gespeichert ist und auf dem Prozessor (1201) ausführbar ist, beinhaltet, wobei, wenn das Programm oder die Anweisung von dem Prozessor (1201) ausgeführt wird, Schritte des Ressourcenverarbeitungsverfahrens gemäß einem der Ansprüche 1 bis 6 implementiert werden.

8. Ein lesbares Speichermedium, wobei das lesbare Speichermedium ein Programm oder eine Anweisung speichert und, wenn das Programm oder die Anweisung von einem Prozessor, der in einer Kommunikationsvorrichtung (1200) beinhaltet ist, ausgeführt wird, Schritte des Ressourcenverarbeitungsverfahrens gemäß einem der Ansprüche 1 bis 6 implementiert werden.

## Revendications

1. Un procédé de traitement de ressources, réalisé par un dispositif de communications (11, 12) et comprenant :
le traitement d'au moins l'une d'une première ressource et d'une deuxième ressource selon une règle de traitement prédéfinie de priorité dans un cas où une première condition est satisfaite, de ne pas abandonner, ne pas invalider ou ne pas retarder une transmission de priorité plus élevée,
**caractérisé en ce que**,
la première condition comprend une condition quelconque parmi :
que la première ressource chevauche la deuxième ressource ; et
que la première ressource et la deuxième ressource ne se chevauchent pas et qu'un intervalle de ressources entre la première ressource et la deuxième ressource soit inférieur à un temps cible, dans lequel
le temps cible est déterminé selon un deuxième temps, le deuxième temps est un temps correspondant obtenu après qu'un intervalle cible est exclu d'un premier temps, le premier temps est un temps requis pour commuter entre différentes technologies de communications, l'intervalle cible comprend au moins un élément parmi des premiers symboles N d'une unité de temps cible, et un temps de commande de gain automatique, et N est un entier positif ; et
la première ressource est une ressource d'une première technologie de communications, et la deuxième ressource est une ressource d'une deuxième technologie de communications.

2. Le procédé de traitement de ressources selon la revendication 1, dans lequel le fait que la première ressource chevauche la deuxième ressource signifie que la première ressource chevauche la deuxième ressource et qu'un domaine temporel cible n'est pas entièrement couvert par une ressource chevauchante, la ressource chevauchante étant une partie chevauchante de la première ressource et de la deuxième ressource, et le domaine temporel cible étant une plage de domaine temporel à laquelle le temps cible appartient.

3. Le procédé de traitement de ressources selon la revendication 1, dans lequel le traitement d'au moins l'une d'une première ressource et d'une deuxième ressource selon une règle de traitement prédéfinie de priorité dans un cas où une première condition est satisfaite comprend :
le traitement d'au moins l'une de la première ressource et de la deuxième ressource selon la règle de traitement prédéfinie de priorité sur la base d'une première priorité, d'une deuxième priorité, et/ou d'une troisième priorité, dans lequel la première priorité est une priorité de transmission dans la première technologie de communications sur une ressource chevauchante, et la ressource chevauchante est une partie chevauchante de la première ressource et de la deuxième ressource ;
la deuxième priorité est une priorité de transmission dans la première technologie de communications dans un domaine temporel cible, et le domaine temporel cible est une plage de domaine temporel correspondant au temps cible ; et
la troisième priorité est une priorité de transmission dans la deuxième technologie de communications sur la ressource chevauchante.

4. Le procédé de traitement de ressources selon la revendication 3, dans lequel le traitement d'au moins l'une de la première ressource et de la deuxième ressource selon la règle de traitement prédéfinie de priorité sur la base d'une première priorité, d'une deuxième priorité, et/ou d'une troisième priorité comprend :
le traitement d'au moins l'une de la première ressource et de la deuxième ressource selon la règle de traitement prédéfinie de priorité sur la base de la première priorité, de la deuxième priorité, et/ou de la troisième priorité dans un cas où une troisième ressource cible est la première ressource, dans lequel
la troisième ressource cible est une ressource avant la ressource chevauchante ;
ou
le traitement d'au moins l'une de la première ressource et de la deuxième ressource selon une première règle prédéfinie dans un cas où la première priorité est plus élevée que la troisième priorité et/ou la deuxième priorité est plus élevée que la troisième priorité, dans lequel
la première règle prédéfinie comprend au moins un fait parmi :
le fait qu'une commutation de technologies de communications est réalisée à l'intérieur de la ressource chevauchante ou de la deuxième ressource ; et
le fait que des premières ressources Q1 de la ressource chevauchante ou des premières ressources Q1 de la deuxième ressource ne sont pas utilisées pour une première transmission cible, dans lequel
la première transmission cible est une transmission quelconque, ou la première transmission cible est une transmission dans la deuxième technologie de communications ;
ou
le traitement d'au moins l'une de la première ressource et de la deuxième ressource selon une deuxième règle prédéfinie sur la base de la première priorité et/ou de la deuxième priorité dans un cas où une transmission dans la deuxième technologie de communications sur la ressource chevauchante satisfait à une condition prédéfinie, dans lequel
la deuxième règle prédéfinie comprend au moins un fait parmi :
le fait qu'une commutation de technologies de communications est réalisée à l'intérieur de la ressource chevauchante ou de la deuxième ressource ; et
le fait que des premières ressources Q2 de la ressource chevauchante ou des premières ressources Q2 de la deuxième ressource ne sont pas utilisées pour une deuxième transmission cible, dans lequel
la deuxième transmission cible est une transmission quelconque, ou la deuxième transmission cible est une transmission dans la deuxième technologie de communications ;
ou
le traitement d'au moins l'une de la première ressource et de la deuxième ressource selon une troisième règle prédéfinie dans un cas où à la fois la première priorité et la deuxième priorité sont plus basses que la troisième priorité, dans lequel la troisième règle prédéfinie comprend au moins un fait parmi :
le fait qu'une commutation de technologies de communications est réalisée à l'intérieur de la première ressource ; et
le fait que des premières ressources Q3 de la première ressource ou des premières ressources Q3 de la ressource chevauchante ne sont pas utilisées pour une troisième transmission cible, dans lequel
la troisième transmission cible est une transmission quelconque, ou la troisième transmission cible est une transmission dans la première technologie de communications ;
ou
le traitement d'au moins l'une de la première ressource et de la deuxième ressource selon une quatrième règle prédéfinie dans un cas où à la fois une transmission dans la première technologie de communications sur la ressource chevauchante et une transmission dans le domaine temporel cible dans la première technologie de communications satisfont à une condition prédéfinie, dans lequel la quatrième règle prédéfinie comprend au moins un fait parmi :
le fait qu'une commutation de technologies de communications est réalisée à l'intérieur de la première ressource ; et
le fait que des premières ressources Q4 de la première ressource ou des premières ressources Q4 de la ressource chevauchante ne sont pas utilisées pour une quatrième transmission cible, dans lequel
la quatrième transmission cible est une transmission quelconque, ou la quatrième transmission cible est une transmission dans la première technologie de communications.

5. Le procédé de traitement de ressources selon la revendication 1, dans lequel le traitement d'au moins l'une d'une première ressource et d'une deuxième ressource selon une règle de traitement prédéfinie de priorité dans un cas où une première condition est satisfaite comprend :
le traitement d'au moins l'une de la première ressource et de la deuxième ressource selon la règle de traitement prédéfinie de priorité sur la base d'une quatrième priorité, d'une cinquième priorité, et/ou d'une sixième priorité, dans lequel
la quatrième priorité est une priorité de transmission sur une quatrième ressource cible, et la quatrième ressource cible est la première ressource avant la deuxième ressource ;
la cinquième priorité est une priorité de transmission dans un domaine temporel cible dans la première technologie de communications, et le domaine temporel cible est une plage de domaine temporel correspondant au temps cible ; et
la sixième priorité est une priorité de transmission sur une cinquième ressource cible, et la cinquième ressource cible est la deuxième ressource après la première ressource.

6. Le procédé de traitement de ressources selon la revendication 5, dans lequel le traitement d'au moins l'une de la première ressource et de la deuxième ressource selon la règle de traitement prédéfinie de priorité sur la base d'une quatrième priorité, d'une cinquième priorité, et/ou d'une sixième priorité comprend :
le traitement d'au moins l'une de la première ressource et de la deuxième ressource selon la règle de traitement prédéfinie de priorité sur la base de la quatrième priorité, de la cinquième priorité, et de la sixième priorité dans un cas où la première ressource est avant la deuxième ressource et l'intervalle de ressources entre la première ressource et la deuxième ressource est inférieur au temps cible ;
ou
le traitement d'au moins l'une de la première ressource et de la deuxième ressource selon une cinquième règle prédéfinie dans un cas où la quatrième priorité est plus élevée que la sixième priorité et/ou la cinquième priorité est plus élevée que la sixième priorité, dans lequel
la cinquième règle prédéfinie comprend au moins un fait parmi :
le fait qu'une commutation de technologies de communications est réalisée à l'intérieur de la deuxième ressource ; et
le fait que W1 deuxièmes ressources après la première ressource ne sont pas utilisées pour une cinquième transmission cible, dans lequel
la cinquième transmission cible est une transmission quelconque, ou la cinquième transmission cible est une transmission dans la deuxième technologie de communications ;
ou
le traitement d'au moins l'une de la première ressource et de la deuxième ressource selon une sixième règle prédéfinie sur la base de la quatrième priorité et/ou de la cinquième priorité dans un cas où une transmission sur la cinquième ressource cible satisfait à une condition prédéfinie, dans lequel
la sixième règle prédéfinie comprend au moins un fait parmi :
le fait qu'une commutation de technologies de communications est réalisée à l'intérieur de la deuxième ressource ; et
le fait que W2 deuxièmes ressources après la première ressource ne sont pas utilisées pour une sixième transmission cible, dans lequel
la sixième transmission cible est une transmission quelconque, ou la sixième transmission cible est une transmission dans la deuxième technologie de communications ;
ou
le traitement d'au moins l'une de la première ressource et de la deuxième ressource selon une septième règle prédéfinie dans un cas où à la fois la quatrième priorité et la cinquième priorité sont plus basses que la sixième priorité, dans lequel la septième règle prédéfinie comprend au moins un fait parmi :
le fait qu'une commutation de technologies de communications est réalisée à l'intérieur d'une ressource de la première technologie de communications ; et
le fait que W3 premières ressources avant la deuxième ressource ne sont pas utilisées pour une septième transmission cible, dans lequel
la septième transmission cible est une transmission quelconque, ou la septième transmission cible est une transmission dans la première technologie de communications ;
ou
le traitement d'au moins l'une de la première ressource et de la deuxième ressource selon une huitième règle prédéfinie dans un cas où à la fois une transmission sur la quatrième ressource cible et une transmission dans le domaine temporel cible dans la première technologie de communications satisfont à une condition prédéfinie, dans lequel
la huitième règle prédéfinie comprend au moins un fait parmi :
le fait qu'une commutation de technologies de communications est réalisée à l'intérieur d'une ressource de la première technologie de communications ; et
le fait que W4 premières ressources avant la deuxième ressource ne sont pas utilisées pour une huitième transmission cible, dans lequel
la huitième transmission cible est une transmission quelconque, ou la huitième transmission cible est une transmission dans la première technologie de communications.

7. Un dispositif de communications (1200), comprenant un processeur (1201), une mémoire (1202), et un programme ou une instruction stocké(e) dans la mémoire (1202) et exécutable sur le processeur (1201), dans lequel lorsque le programme ou l'instruction est exécuté(e) par le processeur (1201), des étapes du procédé de traitement de ressources selon l'une quelconque des revendications 1 à 6 sont mises en œuvre.

8. Un support de stockage lisible, le support de stockage lisible stockant un programme ou une instruction, et lorsque le programme ou l'instruction est exécuté(e) par un processeur compris dans un dispositif de communication (1200), des étapes du procédé de traitement de ressources selon l'une quelconque des revendications 1 à 6 sont mises en œuvre.
